(19) Europäisches Patentamt
European Patent Office
Office européen des brevets

(11) **EP 3 395 045 B1**

(12) **FASCICULE DE BREVET EUROPEEN**

(45) Date de publication et mention
de la délivrance du brevet:
**09.06.2021 Bulletin 2021/23**

(21) Numéro de dépôt: **16823204.9**

(22) Date de dépôt: **15.12.2016**

(51) Int Cl.:
*H04L 29/08* (2006.01)  *H04W 4/38* (2018.01)
*G01S 5/02* (2010.01)

(86) Numéro de dépôt international:
**PCT/EP2016/081275**

(87) Numéro de publication internationale:
**WO 2017/108585 (29.06.2017 Gazette 2017/26)**

(54) **PROCEDE POUR DETERMINER UNE REFERENCE TEMPORELLE ET/OU AU MOINS UNE REFERENCE SPATIALE DANS UN SYSTEME DE COMMUNICATION**

VERFAHREN ZUR BESTIMMUNG EINER TEMPORÄREN REFERENZ UND/ODER MINDESTENS EINER RÄUMLICHEN REFERENZ IN EINEM KOMMUNIKATIONSSYSTEM

METHOD FOR DETERMINING A TEMPORAL REFERENCE AND/OR AT LEAST ONE SPATIAL REFERENCE IN A COMMUNICATION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2015 FR 1563197**

(43) Date de publication de la demande:
**31.10.2018 Bulletin 2018/44**

(73) Titulaire: **Sagemcom Broadband SAS**
**92500 Rueil-Malmaison (FR)**

(72) Inventeurs:
• **LALAM, Massinissa**
**92500 Rueil Malmaison (FR)**
• **LESTABLE, Thierry**
**92500 Rueil Malmaison (FR)**

(74) Mandataire: **Cabinet Le Guen Maillet**
**3, impasse de la Vigie**
**CS 71840**
**35418 Saint-Malo Cedex (FR)**

(56) Documents cités:
**US-A1- 2011 028 166**

• **N Sornin ET AL: "LoRa Specification V1.0", LoRa Alliance Inc., 31 janvier 2015 (2015-01-31), XP055286529, Extrait de l'Internet: URL:https://www.lora-alliance.org/portals/ 0/specs/LoRaWAN Specification 1R0.pdf [extrait le 2016-07-07] cité dans la demande**

**Description**

La présente invention concerne une détermination d'une référence temporelle pour synchroniser en temps-fréquence un dispositif vis-à-vis d'un système de communication et/ou d'une ou plusieurs références spatiales pour déterminer une géolocalisation dudit dispositif.

L'Internet des Objets (« Internet of Things » en anglais) émerge. L'Internet des Objets représente l'extension de l'Internet à des choses et à des lieux du monde physique. Alors que l'Internet ne se prolonge habituellement pas au-delà du monde électronique, l'Internet des Objets représente des échanges d'informations et de données provenant de dispositifs présents dans le monde réel vers l'Internet, comme par exemple pour effectuer une collecte de relevés de consommations électriques ou de consommations d'eau. L'Internet des Objets est considéré comme la troisième évolution de l'Internet, baptisée Web 3.0. L'Internet des Objets est en partie responsable de l'accroissement actuel du volume de données à transmettre et à stocker, et est ainsi à l'origine de ce qu'on appelle le « Big Data ». L'Internet des Objets revêt un caractère universel pour désigner des objets connectés aux usages variés, par exemple dans le domaine industriel, agro-alimentaire, de la e-santé ou de la domotique.

Pour permettre à des objets communicants de communiquer dans le cadre de l'Internet des Objets, des passerelles de collecte situées sur des points géographiquement hauts sont déployées par un opérateur. Hors opérations de maintenance, ces passerelles sont typiquement fixes et permanentes. On peut par exemple citer sur ce modèle les réseaux SigFox ou ThingPark. Ces passerelles de collecte communiquent avec les objets communicants grâce à des systèmes de communication radio moyenne ou longue portée de type LPWAN (« Low-Power Wide Area Network » en anglais), comme par exemple la technologie LoRa (marque déposée, diminutif de « Long Range » en anglais). Ces passerelles servent ainsi de relais entre les objets communicants et un serveur (réseau cœur) configuré pour traiter des informations remontées par les objets communicants et pour éventuellement contrôler lesdits objets communicants.

Une propriété souvent recherchée dans les systèmes de communication radio moyenne ou longue portée de type LPWAN est la possibilité de permettre à des équipements, objets communicants ou passerelles de collecte, de se localiser géographiquement (géolocaliser).

Une solution connue à ces deux objectifs consiste à ajouter à chaque équipement en question une puce de système de navigation par satellite (GNSS ou « Global Navigation Satellite System » en anglais), tel que le GPS (« Global Positioning System » en anglais), permettant ainsi audit équipement de déterminer sa position. Cette information peut ensuite être remontée au serveur (réseau cœur) grâce à la technologie de communication LPWAN. Le coût de l'ajout d'une telle puce n'est toutefois pas négligeable, tant d'un point de vue financier que d'un point de vue consommation énergétique.

Il est aussi possible de s'appuyer sur les signaux radio échangés dans le cadre de la technologie de communication LPWAN pour utiliser des techniques de localisation basées sur des informations de propagation des signaux radio, par exemple des techniques de type DRSS (« Differential Received Signal Strength » en anglais) ou TDOA (« Time Différence of Arrivai » en anglais). En effet, les passerelles de collecte dans les systèmes de communication radio moyenne ou longue portée de type LPWAN insèrent typiquement dans des balises (« beacon » en anglais) de synchronisation transmises périodiquement des coordonnées géographiques d'antennes (longitude, latitude) respectives desdites passerelles de collecte, ce qui fournit des références spatiales pour permettre la géolocalisation d'autres équipements. Il subsiste toutefois un doute quant à la fiabilité de ces coordonnées géographiques.

De plus, dans le cadre de la technologie de communication LPWAN comme dans d'autres réseaux de communication, il est souhaitable voire nécessaire de partager une référence temporelle commune. Les balises mentionnées ci-dessus permettent à d'autres équipements, objets communicants ou passerelles de collecte, de se synchroniser (compenser d'éventuelles dérives d'horloge) en temps-fréquence. Il subsiste cependant ici aussi un doute quant à la fiabilité de ces balises en tant que références temporelles.

Il est souhaitable de pallier ces inconvénients de l'état de la technique. Il est notamment souhaitable de fournir une solution qui permette à des équipements, dans un réseau de communication sans-fil, plus particulièrement de type LPWAN, dans lequel des passerelles de collecte émettent des balises de synchronisation incluant des informations de coordonnées géographiques d'antennes respectives desdites passerelles de collecte, de déterminer une référence temporelle et/ou au moins une référence spatiale sur laquelle s'appuyer pour respectivement effectuer une synchronisation en temps-fréquence desdits équipements vis-à-vis du réseau de communication sans-fil et/ou effectuer une géolocalisation desdits équipements.

L'invention concerne un procédé pour déterminer une référence temporelle et/ou au moins une référence spatiale, par un dispositif d'un système de communication comportant une pluralité de passerelles de collecte adaptées pour communiquer avec des dispositifs terminaux par communications sans-fil, chacune des passerelles de collecte étant configurée pour transmettre au sein du système de communication des balises, dites de synchronisation, permettant à des dispositifs les recevant de se synchroniser en temps-fréquence vis-à-vis dudit système de communication. Pour chaque balise ou succession de balises d'une pluralité de balises ou succession de balises respectivement reçues en provenance de passerelles de collectes distinctes, ledit dispositif effectue les étapes suivantes : parcourir ladite balise ou succession de balises et en obtenir une information de géolocalisation courante de la passerelle de collecte qui a transmis ladite balise ou succession de balises ; parcourir ladite balise ou succession de balises et en obtenir une information représentative d'une technologie de communication utilisée pour déterminer la géolocalisation courante de la passerelle de collecte ayant transmis ladite balise ou succession de balises ; parcourir ladite balise ou succession de balises et en obtenir une information indiquant si la géolocalisation courante de la passerelle de collecte ayant transmis ladite balise ou succession de balises a été déterminée grâce à des moyens internes à ladite passerelle de collecte, ou bien si la géolocalisation courante de la passerelle de collecte ayant transmis ladite balise ou succession de balises a été déterminée grâce à des moyens externes à ladite passerelle de collecte. Alors, le dispositif utilise les informations ainsi obtenues pour considérer ou pas, ou pondérer, les balises reçues, pour déterminer la référence temporelle pour synchroniser en temps-fréquence ledit dispositif vis-à-vis dudit système de communication et/ou la ou les références spatiales pour déterminer la géolocalisation dudit dispositif.

Selon un mode de réalisation particulier, pour chaque balise ou succession de balises de ladite pluralité de balises, ledit dispositif effectue en outre l'étape suivante : parcourir ladite balise ou succession de balises et en obtenir une information représentative d'un algorithme de résolution pour déterminer la géolocalisation courante de la passerelle de collecte ayant transmis ladite balise ou succession de balises. De plus, le dispositif utilise aussi ladite information ainsi obtenue pour déterminer la référence temporelle pour synchroniser en temps-fréquence ledit dispositif vis-à-vis dudit système de communication et/ou la ou les références spatiales pour déterminer la géolocalisation dudit dispositif.

Selon un mode de réalisation particulier, pour chaque balise ou succession de balises de ladite pluralité de balises, ledit dispositif effectue en outre l'étape suivante : parcourir ladite balise ou succession de balises et en obtenir une information représentative d'un instant auquel la géolocalisation courante de la passerelle de collecte ayant transmis ladite balise ou succession de balises a été déterminée. De plus, le dispositif utilise aussi ladite information ainsi obtenue pour déterminer la référence temporelle pour synchroniser en temps-fréquence ledit dispositif vis-à-vis dudit système de communication et/ou la ou les références spatiales pour déterminer la géolocalisation dudit dispositif.

Selon un mode de réalisation particulier, pour chaque balise ou succession de balises de ladite pluralité de balises, ledit dispositif effectue en outre l'étape suivante : parcourir ladite balise ou succession de balises et en obtenir une information représentative d'une différence éventuelle entre la géolocalisation courante de la passerelle de collecte ayant transmis ladite balise ou succession de balises et une géolocalisation précédente de ladite passerelle de collecte. De plus, le dispositif utilise aussi ladite information ainsi obtenue pour déterminer la référence temporelle pour synchroniser en temps-fréquence ledit dispositif vis-à-vis dudit système de communication et/ou la ou les références spatiales pour déterminer la géolocalisation dudit dispositif.

Selon un mode de réalisation particulier, pour chaque balise ou succession de balises de ladite pluralité de balises, ledit dispositif effectue en outre l'étape suivante : parcourir ladite balise ou succession de balises et en obtenir une information représentative d'une incertitude moyenne de géolocalisation vis-à-vis de la passerelle de collecte ayant transmis ladite balise ou succession de balises. De plus, le dispositif utilise aussi ladite information ainsi obtenue pour déterminer la référence temporelle pour synchroniser en temps-fréquence ledit dispositif vis-à-vis dudit système de communication et/ou la ou les références spatiales pour déterminer la géolocalisation dudit dispositif.

Selon un mode de réalisation particulier, pour chaque balise ou succession de balises de ladite pluralité de balises, ledit dispositif effectue en outre l'étape suivante : parcourir ladite balise ou succession de balises et en obtenir un indicateur de convergence des coordonnées géographiques de la passerelle de collecte ayant transmis ladite balise ou succession de balises. De plus, le dispositif utilise aussi ladite information ainsi obtenue pour déterminer la référence temporelle pour synchroniser en temps-fréquence ledit dispositif vis-à-vis dudit système de communication et/ou la ou les références spatiales pour déterminer la géolocalisation dudit dispositif.

Selon un mode de réalisation particulier, le dispositif détermine une information de convergence de la géolocalisation diffusée dans ladite balise ou succession de balises considérée et effectue un filtrage des balises en fonction de l'information de convergence déterminée.

Selon un mode de réalisation particulier, le dispositif effectue un classement des balises au sein d'une liste selon un ensemble de règles prédéfinies, et le dispositif retient une quantité prédéterminée N de balises ou succession de balises en tête de liste pour déterminer la référence temporelle pour synchroniser en temps-fréquence ledit dispositif vis-à-vis dudit système de communication et/ou la ou les références spatiales pour déterminer la géolocalisation dudit dispositif.

Selon un mode de réalisation particulier, le dispositif applique un facteur de pondération à chaque balise ou succession de balises retenue pour déterminer la référence temporelle pour synchroniser en temps-fréquence ledit dispositif vis-à-vis dudit système de communication.

Selon un mode de réalisation particulier, chaque balise reçue en provenance d'une passerelle de collecte dont la géolocalisation courante a été obtenue grâce à une puce GPS est pondérée par le facteur de pondération suivant :

$\alpha_m$ (1 - $\alpha_i$ - *Loc_Intern* + 2. $\alpha_i$. Loc_Intern) (1 - $\alpha_c$ - *Loc_Conv* + 2. $\alpha_c$. Loc_Conv) et chaque autre balise est pondérée par le facteur de pondération suivant : $\beta_m$ (1 - $\beta_i$ - *Loc_Intern* + 2. $\beta_i$. Loc_Intern)(1 - $\beta_c$ - *Loc_Conv* + 2. $\beta_c$. Loc_Conv) où $\alpha_m$, $\alpha_i$, $\alpha_c$, $\beta_m$, $\beta_i$ et $\beta_c$ sont des coefficients de pondération tels que :

- $\alpha_m > \beta_m$ ;
- $\alpha_i > 0,5$ et $\beta_i > 0,5$ ;
- $\alpha_c > 0,5$ et $\beta_c > 0,5$ ;

où *Loc_Intern* vaut « 1 » lorsque ladite géolocalisation courante a été déterminée grâce à des moyens internes à ladite passerelle de collecte et vaut « 0 » lorsque ladite géolocalisation courante a été déterminée grâce à des moyens externes à ladite passerelle de collecte, et où *Loc_Conv* est utilisé comme indicateur de convergence des coordonnées géographiques de la passerelle de collecte ayant transmis ladite balise ou succession de balises, *Loc_Conv* valant « 1 » lorsque la différence en valeur absolue entre la géolocalisation courante de ladite passerelle de collecte et une géolocalisation précédente de ladite passerelle de collecte est inférieure ou égale à une incertitude moyenne de géolocalisation vis-à-vis de la passerelle de collecte, et vaut « 0 » sinon.

L'invention concerne également un dispositif configuré pour déterminer une référence temporelle et/ou au moins une référence spatiale, le dispositif étant destiné à être inclus dans un système de communication comportant en outre une pluralité de passerelles de collecte adaptées pour communiquer avec des dispositifs terminaux par communications sans-fil, chacune des passerelles de collecte étant configurée pour transmettre au sein du système de communication des balises, dites de synchronisation, permettant à des dispositifs les recevant de se synchroniser en temps-fréquence vis-à-vis dudit système de communication. Ledit dispositif implémente, pour chaque balise ou succession de balises d'une pluralité de balises ou succession de balises respectivement reçues en provenance de passerelles de collectes distinctes : des moyens pour parcourir ladite balise ou succession de balises et en obtenir une information de géolocalisation courante de la passerelle de collecte qui a transmis ladite balise ou succession de balises ; des moyens pour parcourir ladite balise ou succession de balises et en obtenir une information représentative d'une technologie de communication utilisée pour déterminer la géolocalisation courante de la passerelle de collecte ayant transmis ladite balise ou succession de balises ; des moyens pour parcourir ladite balise ou succession de balises et en obtenir une information indiquant si la géolocalisation courante de la passerelle de collecte ayant transmis ladite balise ou succession de balises a été déterminée grâce à des moyens internes à ladite passerelle de collecte, ou bien si la géolocalisation courante de la passerelle de collecte ayant transmis ladite balise ou succession de balises a été déterminée grâce à des moyens externes à ladite passerelle de collecte. Ledit dispositif est alors configuré pour utiliser les informations ainsi obtenues pour considérer ou pas, ou pondérer, les balises reçues, pour déterminer la référence temporelle pour synchroniser en temps-fréquence ledit dispositif vis-à-vis dudit système de communication et/ou la ou les références spatiales pour déterminer la géolocalisation dudit dispositif.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus, lorsque ledit programme est exécuté par le processeur. L'invention concerne également un médium de stockage d'informations comprenant un tel programme d'ordinateur.

L'invention concerne également un procédé selon la revendication 12.

L'invention concerne également un procédé selon la revendication 13.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un système de communication dans lequel la présente invention peut être implémentée ;
- la Fig. 2 illustre schématiquement un exemple d'architecture matérielle d'un dispositif de communication du système de communication de la Fig. 1 ;
- la Fig. 3 illustre schématiquement un exemple d'architecture protocolaire implémentée dans le système de communication de la Fig. 1 ;
- la Fig. 4 illustre schématiquement un algorithme de transmission de balises dans le système de communication de la Fig. 1 ;
- la Fig. 5 illustre schématiquement un algorithme de réception et de traitement de balises dans le système de communication de la Fig. 1 ;
- la Fig. 6 illustre schématiquement un algorithme de traitement de balises dans le système de communication de la Fig. 1, dans un premier mode de réalisation particulier ; et
- la Fig. 7 illustre schématiquement un algorithme de traitement de balises dans le système de communication de la Fig. 1, dans un second mode de réalisation particulier.

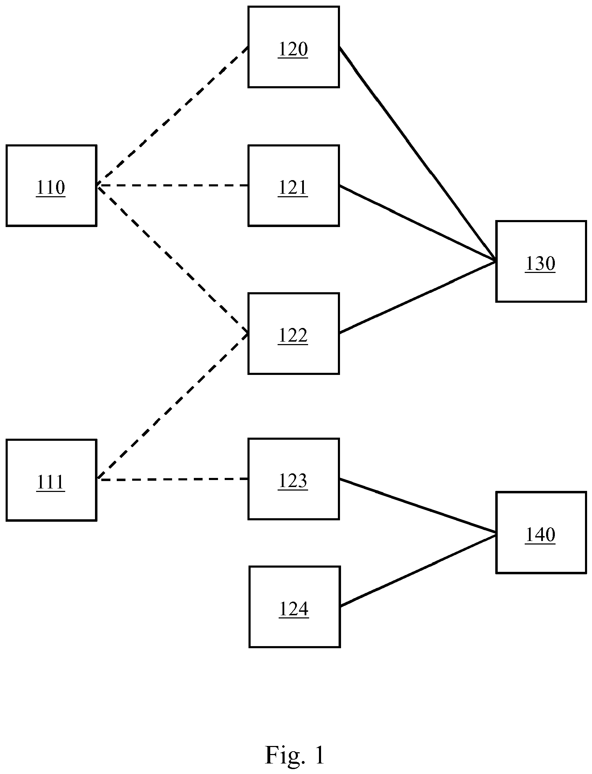

La **Fig. 1** illustre schématiquement un système de communication dans lequel la présente invention peut être implémentée.

Le système de communication comporte une pluralité de passerelles de collecte 120, 121, 122. Les passerelles de collecte 120, 121, 122 disposent de liens de communication respectifs avec un premier serveur 130 auquel lesdites passerelles de collecte sont rattachées. D'autres passerelles de collecte 123, 124 disposent de liens de communication respectifs avec un second serveur 140 auquel lesdites passerelles de collecte sont rattachées, formant ainsi un autre système de communication. Deux infrastructures réseau indépendantes sont ainsi implémentées, une première infrastructure réseau autour du premier serveur 130 et une seconde infrastructure réseau de communication autour du second serveur 140.

Selon un mode de réalisation particulier, chaque passerelle de collecte 120, 121, 122, 123, 124 intègre une fonction d'accès à l'Internet et le lien de communication entre ladite passerelle résidentielle avec le serveur auquel ladite passerelle est rattachée repose sur le protocole IP (« Internet Protocol » en anglais, tel que défini dans le document normatif RFC 791).

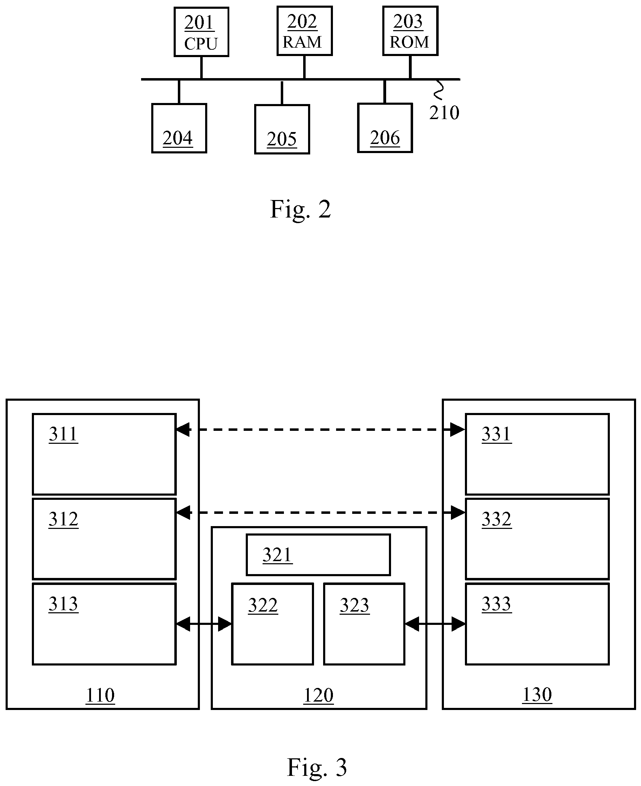

Dans le système de communication, des messages doivent être remontés de chaque dispositif terminal 110, 111 jusqu'au serveur de l'infrastructure réseau auquel ledit dispositif terminal est rattaché. Ledit serveur a un rôle de contrôle et de collecte d'informations disponibles auprès des dispositifs terminaux 110, 111, et les passerelles de collecte 120, 121, 122, 123, 124 ont un rôle de relais entre les dispositifs terminaux 110, 111 et les serveurs de l'infrastructure réseau auquel lesdits dispositifs terminaux sont respectivement rattachés. Eventuellement des messages peuvent aussi être transmis depuis les serveurs jusqu'aux dispositifs terminaux via les passerelles de collecte. Un exemple d'architecture protocolaire implémentée dans le système de communication est décrit ci-après en relation avec la Fig. 3.

Pour permettre de remplir ce rôle de relais, chaque passerelle de collecte 120, 121, 122, 123, 124 dispose d'au moins une interface radio permettant à ladite passerelle de collecte de communiquer avec au moins un dispositif terminal 110, 111, c'est-à-dire au moins un objet communicant d'après la terminologie de l'Internet des Objets. Ladite interface radio est par exemple conforme au protocole LoRaWAN (marque déposée) qui repose sur la technologie de communication radio LoRa (marque déposée). Ladite interface radio est telle qu'un dispositif terminal peut être à portée de communication par voie radio d'une pluralité de passerelles de collecte. C'est le cas par exemple du dispositif terminal 110 sur la Fig. 1, qui est à portée de communication par voie radio des passerelles de collecte 120, 121, 122. Ladite interface radio est telle qu'un dispositif terminal peut être à portée de communication par voie radio d'une pluralité de passerelles de collecte appartenant à des infrastructures réseau distinctes. C'est le cas par exemple du dispositif terminal 111 sur la Fig. 1, qui est à portée de communication par voie radio des passerelles de collecte 122, 123 qui appartiennent à des infrastructures réseau distinctes. Ainsi, dans un mode de réalisation particulier où le dispositif terminal en question est apte à décoder des balises transmises par des passerelles de collecte appartenant à une infrastructure réseau distincte de l'infrastructure réseau auquel ledit dispositif terminal est rattaché, ledit dispositif terminal peut utiliser lesdites balises comme références spatiales pour effectuer une géolocalisation dudit dispositif terminal et/ou pour déterminer une référence temporelle pour effectuer une synchronisation en temps-fréquence dudit dispositif terminal.

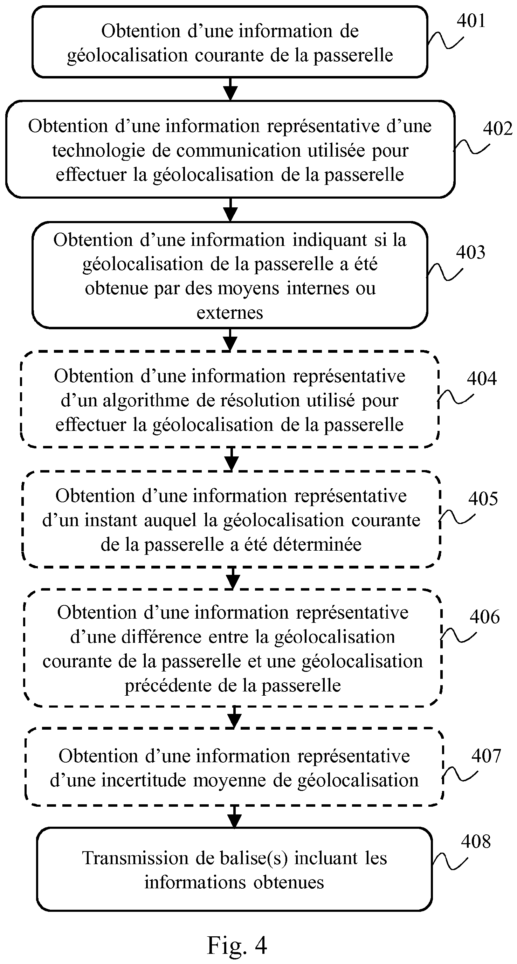

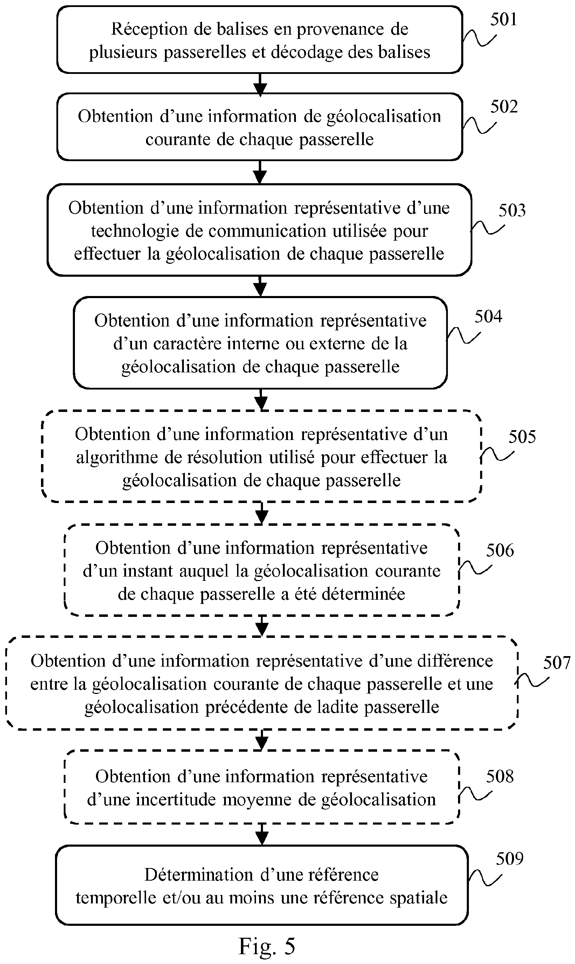

De telles balises sont construites comme décrit ci-après en relation avec la Fig. 4 et sont utilisées comme décrit ci-après en relation avec la Fig. 5.

La Fig. 2 illustre schématiquement un exemple d'architecture matérielle d'un dispositif de communication du système de communication de la Fig. 1. Chaque dispositif terminal et/ou chaque passerelle de collecte et/ou chaque serveur du système de communication peuvent être construit sur la base d'une telle architecture matérielle.

Le dispositif de communication comporte, reliés par un bus de communication 210 : un processeur ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage ou un lecteur de support de stockage, tel qu'un lecteur de cartes SD (« Secure Digital » en anglais) 204 ou un disque dur HDD (« Hard Disk Drive » en anglais) ; une interface de communication 205, et éventuellement une autre interface de communication 206.

Lorsque le dispositif de communication de la Fig. 2 représente un dispositif terminal du système de communication, l'interface de communication 205 est configurée pour permettre audit dispositif terminal de communiquer avec des passerelles de collecte du système de communication.

Lorsque le dispositif de communication de la Fig. 2 représente une passerelle de collecte du système de communication, l'interface de communication 205 est configurée pour permettre à ladite passerelle de collecte de communiquer avec des dispositifs terminaux du système de communication, et l'autre interface de communication 206 est configurée pour permettre à ladite passerelle de collecte de communiquer avec le serveur de l'infrastructure réseau à laquelle ladite passerelle de collecte est rattachée.

Lorsque le dispositif de communication de la Fig. 2 représente un serveur du système de communication, l'interface de communication 205 est configurée pour permettre audit serveur de communiquer avec les passerelles de collecte du système de communication qui sont rattachées à la même infrastructure réseau que ledit serveur.

Le processeur 201 est capable d'exécuter des instructions chargées dans la RAM 202 à partir de la ROM 203, d'une mémoire externe, d'un support de stockage, ou d'un réseau de communication. Lorsque le dispositif de communication est mis sous tension, le processeur 201 est capable de lire de la RAM 202 des instructions et de les exécuter. Ces instructions forment un programme d'ordinateur causant la mise en œuvre, par le processeur 201, de tout ou partie des algorithmes et étapes décrits ici en relation avec le dispositif de communication en question.

Ainsi, tout ou partie des algorithmes et étapes décrits ici peut être implémenté sous forme logicielle par exécution d'un ensemble d'instructions par une machine programmable, tel qu'un DSP (« Digital Signal Processor » en anglais) ou un microcontrôleur. Tout ou partie des algorithmes et étapes décrits ici peut aussi être implémenté sous forme matérielle par une machine ou un composant dédié, tel qu'un FPGA (« Field-Programmable Gate Array » en anglais) ou un ASIC (« Application-Specific Integrated Circuit » en anglais).

La **Fig. 3** illustre schématiquement un exemple d'architecture protocolaire implémentée dans le système de communication. La Fig. 3 illustre l'architecture protocolaire de manière répartie entre le dispositif terminal 110, la passerelle de collecte 120 et le premier serveur 130.

Le dispositif terminal 110 comporte une couche haute 311 et une couche basse 313, ainsi qu'une couche intermédiaire 312 faisant le lien entre la couche haute 311 et la couche basse 313. La couche haute 311 est une application client. La couche intermédiaire 312 implémente le protocole d'échange, par exemple de type LoRaWAN (marque déposée), entre le dispositif terminal 110 et le premier serveur 130. La couche basse 313 est la couche physique (PHY) de l'interface radio du dispositif terminal 110, par exemple de type LoRa (marque déposée), qui permet de communiquer avec les passerelles de collecte du système de communication, comme par exemple la passerelle de collecte 120.

Le premier serveur 130 comporte une couche haute 331 et une couche basse 333, ainsi qu'une couche intermédiaire 332 faisant le lien entre la couche haute 331 et la couche basse 333. La couche haute 331 est une application serveur. La couche intermédiaire 332 implémente le protocole d'échange, par exemple de type LoRaWAN (marque déposée), entre le premier serveur 130 et chaque dispositif terminal rattaché à l'infrastructure réseau à laquelle appartient ledit premier serveur 130, comme par exemple le dispositif terminal 110. La couche basse 333 est la couche physique (PHY) de l'interface du premier serveur 130 qui permet de communiquer avec les passerelles de collecte de l'infrastructure réseau à laquelle appartient ledit premier serveur 130, comme par exemple la passerelle de collecte 120.

La passerelle de collecte 120 comporte une première couche basse 322 et une seconde couche basse 323, ainsi qu'un module d'adaptation 321. La première couche basse 322 est la couche physique (PHY) de l'interface radio de la passerelle de collecte 120 qui permet de communiquer avec des dispositifs terminaux du système de communication, comme par exemple le dispositif terminal 110. La seconde couche basse 323 est la couche physique (PHY) de l'interface de la passerelle de collecte 120 qui permet de communiquer avec le premier serveur 130. Le module d'adaptation 321 est configuré pour convertir les messages reçus via la première couche basse 322 en messages adaptés à la seconde couche basse 323, et vice versa.

L'architecture protocolaire représentée sur la Fig. 3 est telle que la couche intermédiaire 312 du dispositif terminal 110 communique avec la couche intermédiaire 332 du premier serveur 130, en s'appuyant sur les couches basses respectives du dispositif terminal 110 et du premier serveur 130 via la passerelle de collecte 120. L'architecture protocolaire représentée sur la Fig. 3 est aussi telle que la couche haute 311 du dispositif terminal 110 communique avec la couche haute 331 du premier serveur 130, en s'appuyant sur les couches intermédiaires respectives 312, 332 du dispositif terminal 110 et du premier serveur 130.

Les couches et modules protocolaires représentés peuvent être complétés, notamment par des piles protocolaires permettant au premier serveur 130 d'échanger avec la passerelle de collecte 120, notamment pour permettre au serveur 130 de configurer la passerelle de collecte 120.

Dans le cadre de l'architecture protocolaire représentée sur la Fig. 3, la première couche basse 321 de la passerelle de collecte 120 est en charge de l'émission régulière de balises, tel que décrit ci-après en relation avec la Fig. 4, et la couche basse 313 du dispositif terminal 110 est en charge de la réception et du traitement desdites balises, tel que décrit ci-après en relation avec la Fig. 5. L'émission régulière de balises peut aussi être gérée par un module complémentaire de la passerelle de collecte 120 qui est connecté à la couche basse 322 indépendamment du module d'adaptation 321. Le traitement desdites balises peut aussi être géré par un module complémentaire du dispositif terminal 110 qui est connecté à la couche basse 313 indépendamment de la couche intermédiaire 312. La réception de balises issues d'autres passerelles de collecte peut aussi être gérée par la première couche basse 322 de la passerelle de collecte 120, et le traitement desdites balises, tel que décrit ci-après en relation avec la Fig. 5, peut être géré soit par ladite première couche basse 322, soit par un module complémentaire de la passerelle de collecte 120 qui est connecté à la couche basse 322 indépendamment du module d'adaptation 321.

La **Fig. 4** illustre schématiquement un algorithme de transmission de balises dans le système de communication. L'algorithme de la Fig. 4 est préférentiellement implémenté par chaque passerelle de collecte du système de communication. Considérons à titre illustratif que l'algorithme de la Fig. 4 est implémenté par la passerelle de collecte 120.

Dans une étape 401, la passerelle de collecte 120 obtient une information de géolocalisation courante de ladite passerelle de collecte 120, ou du moins, lorsque la passerelle de collecte 120 dispose d'une antenne déportée, une information de géolocalisation courante de ladite antenne. Cette information de géolocalisation courante peut être obtenue de différentes manières. Selon la passerelle de collecte considérée, des méthodes différentes sont probablement utilisées dans un même système de communication. La géolocalisation est, selon un premier exemple, obtenue grâce à un algorithme de résolution de type TOA (« Time of Arrivai » en anglais) par le biais d'une puce GPS intégrée à la passerelle de collecte 120, à savoir donc des moyens internes à la passerelle de collecte 120. L'information de géolocalisation courante est, selon un second exemple dans lequel la passerelle de collecte 120 est installée de manière fixe et immuable, obtenue par paramétrage de la passerelle de collecte 120 lors de l'installation de ladite passerelle de collecte 120 grâce à un algorithme de résolution de type TOA par le biais d'une puce GPS intégrée dans un équipement distinct utilisé par un opérateur lors de ladite installation, à savoir donc des moyens externes à la passerelle de collecte 120. L'information de géolocalisation courante est, selon un troisième exemple, obtenue grâce à un algorithme de résolution de type TDOA ou DRSS par la passerelle de collecte 120 elle-même grâce à des réception de signaux issus d'autres passerelles de collecte (dont les géolocalisations respectives sont connues), à savoir donc des moyens internes à la passerelle de collecte 120. L'information de géolocalisation courante est, selon un quatrième exemple, obtenue grâce à un algorithme de résolution de type TDOA ou DRSS par une unité centrale externe connectée à des tierces passerelles de collecte (dont les géolocalisations respectives sont connues) grâce à des réceptions de signaux issus de la passerelle de collecte 120 par lesdites tierces passerelles de collecte, à savoir donc des moyens externes à la passerelle de collecte 120 (ladite unité centrale externe transmettant alors ladite géolocalisation courante à ladite passerelle de collecte 120).

Dans une étape 402, la passerelle de collecte 120 obtient une information *Loc_RAT* représentative d'une technologie de communication utilisée pour déterminer la géolocalisation courante de la passerelle de collecte 120. Dans un mode de réalisation préféré, cette information *Loc_RAT* est représentative d'une technologie de communication utilisé pour déterminer la géolocalisation courante de la passerelle de collecte 120. Par exemple, l'information *Loc_RAT* est représentative du fait que la géolocalisation courante de la passerelle de collecte 120 a été déterminée grâce à une puce GPS, ou que la géolocalisation courante de la passerelle de collecte 120 a été déterminée grâce à l'interface radio qui permet à ladite passerelle de collecte 120 de communiquer avec des dispositifs terminaux du système de communication (et de recevoir des signaux en provenance d'autres passerelles de collecte).

Dans une étape 403, la passerelle de collecte 120 obtient une information *Loc_Intern* indiquant si la géolocalisation courante de la passerelle de collecte a été déterminée grâce à des moyens internes à ladite passerelle de collecte 120, par exemple puce GPS intégrée, ou bien si la géolocalisation courante de la passerelle de collecte a été déterminée grâce à des moyens externes à ladite passerelle de collecte 120.

Dans une étape 404 optionnelle, la passerelle de collecte 120 obtient une information *Loc_Meth* représentative d'un algorithme de résolution utilisé pour déterminer la géolocalisation courante de la passerelle de collecte 120. Une telle information n'est notamment pas nécessaire lorsque l'algorithme de résolution utilisé se déduit sans ambiguïté de la technologie de communication utilisée pour déterminer la géolocalisation courante de la passerelle de collecte 120. Par exemple, si la technologie de communication utilisée repose sur l'utilisation d'une puce GPS, il s'en suit que l'algorithme de résolution utilisé pour déterminer la géolocalisation courante de la passerelle de collecte 120 est de type TOA.

Dans une étape 405 optionnelle, la passerelle de collecte 120 obtient une information *Loc_PosT* représentative d'un instant auquel la géolocalisation courante de la passerelle de collecte 120 a été déterminée.

Dans une étape 406 optionnelle, la passerelle de collecte 120 obtient une information *Loc_LastPosDif* représentative d'une différence éventuelle entre la géolocalisation courante de la passerelle de collecte 120 et une géolocalisation précédente de la passerelle de collecte 120 (typiquement la différence éventuelle entre les deux dernières géolocalisations en date de la passerelle de collecte 120). Une alternative consiste à obtenir, à la place, une information représentative de ladite géolocalisation précédente, mais cela supposerait un plus grand nombre de bits pour représenter l'information obtenue à l'étape 406. Le fait d'avoir la connaissance de la différence entre la géolocalisation courante et la géolocalisation précédente permet à un équipement qui obtient cette information par décodage de balise (comme décrit ci-après en relation avec la Fig. 5) d'avoir une estimation grossière de la stabilité de la géolocalisation de la passerelle de collecte concernée, sans avoir à observer et stocker les contenus de différentes balises successives, ce qui, pour des technologies de communication LPWAN, peut parfois prendre plusieurs minutes.

Dans une étape 407 optionnelle, la passerelle de collecte 120 obtient une information *Loc_PosUncert* représentative d'une incertitude moyenne de géolocalisation vis-à-vis de la passerelle de collecte 120.

Dans une étape 408, la passerelle de collecte 120 construit une balise, à émettre à destination des dispositifs terminaux dans le système de communication (même si cette balise peut aussi être reçue par d'autres passerelles de collecte), en incluant les informations obtenues aux étapes 401 à 407. La passerelle de collecte 120 transmet alors, au moment opportun vis-à-vis du cadencement (« scheduling » en anglais) des transmissions entre passerelles de collecte et dispositifs terminaux, la balise ainsi construite.

Dans un mode de réalisation particulier, les paramètres *Loc_LastPosDif* et *Loc_PosUncert* sont remplacés pour la construction de la balise par un paramètre *Loc_Conv* indicateur de convergence des coordonnées géographiques de la passerelle de collecte concerné, afin de minimiser la quantité d'informations à transmettre via ladite balise. Le paramètre *Loc_Conv* est représentatif de la valeur absolue de la différence entre la valeur du paramètre *Loc_LastPosDif* et de la valeur du paramètre *Loc_PosUncert.* Le paramètre *Loc_Conv* est préférentiellement défini selon la règle suivante :

- lorsque la valeur absolue du paramètre *Loc_LastPosDif* est inférieure ou égale à la valeur absolue du paramètre *Loc_PosUncert,* le paramètre *Loc_Conv* prend une première valeur par défaut, *e.g.* la valeur binaire « 1 » ; et
- lorsque la valeur absolue du paramètre *Loc_LastPosDif* est supérieure à la valeur absolue du paramètre *Loc_PosUncert,* le paramètre *Loc_Conv* prend une seconde valeur par défaut distincte de la première valeur par défaut, *e.g.* la valeur binaire « 0 ».

Grâce aux informations ainsi contenues dans cette balise, la passerelle de collecte 120 fournit à d'autres équipements, dispositifs terminaux et/ou autres passerelles de collecte, des indications concernant la qualité de l'information de géolocalisation courante diffusée dans ladite balise, et permettant ainsi auxdits autres équipements d'effectuer leur propre classement interne afin de considérer ou pas ladite balise (et donc la passerelle de collecte qui a transmis ladite balise) comme référence spatiale dans leurs propres opérations de géolocalisation et/ou de pondérer ladite balise en tant que référence temporelle dans leurs propres opérations de synchronisation temps-fréquence.

L'algorithme de la Fig. 4 est tel que les informations obtenues dans les étapes 401 à 407 sont insérées dans chaque balise envoyée par la passerelle de collecte 120. Les informations obtenues dans les étapes 401 à 407 peuvent être réparties sur plusieurs balises successives. Une alternance avec des balises strictement conformes aux spécifications LoRaWAN 1.0 peut être mise en place, de manière à maintenir la compatibilité avec des équipements, dispositifs terminaux et/ou passerelles de collecte, déjà installés ou disponibles sur étagère.

Il est possible de diviser un même champ de balise en plusieurs sous-champs, de sorte à optimiser l'utilisation des octets. Il est aussi possible d'utiliser des tables de correspondance (« Look-Up Tables » en anglais) pour remplacer des combinaisons de valeurs de champs par des index de table.

Considérons à titre illustratif un système de communication basé sur la technologie de communication LoRa (marque déposée) telle que décrite dans les spécifications LoRaWAN v1.0, chaque balise transmise par une passerelle de collecte incluent un identifiant (champ appelé *NetId*) de l'infrastructure réseau à laquelle ladite passerelle de collecte appartient, et une information d'horodatage GPS (champ appelé *Time),* ainsi qu'une information spécifique à ladite passerelle de collecte (champ appelé *GwSpecific).* Dans les spécifications LoRaWAN v1.0, ce champ *GwSpecific* indique le type d'information spécifique contenue (champ *Info-Desc*), ainsi que les coordonnées géographiques (latitude et longitude) de l'antenne considérée de la passerelle de collecte en question. Pour le champ *InfoDesc,* de nombreuses valeurs possibles sont d'utilisation non encore définie par les spécifications LoRaWAN v1.0 (libellées RFU « Reserved for Future Use » en anglais). Dans les spécifications LoRaWAN v1.0, le champ *InfoDesc* a une taille d'un octet : les valeurs « 0 », « 1 »et « 2 » sont réservées à la diffusion de coordonnées (latitude, longitude) respectivement de première, seconde et troisième antennes de la passerelle de collecte émettant la balise en question ; les valeurs « 3 » à « 127 » sont destinés à des usages futurs, et donc peuvent être affectés à la transmission des informations obtenues dans les étapes 401 à 407 ; et les valeurs « 128 » à « 255 » sont réservées à des diffusions spécifiques à l'infrastructure réseau.

Dans un premier exemple d'adaptation du champ *InfoDesc :*

- la valeur « 3 » est affectée à la transmission, dans le champ *GwSpecific,* des paramètres *Loc_Intern, Loc_RAT, Loc_Meth* et *Loc_PosT ;*
- la valeur « 4 » est affectée à la transmission, dans le champ *GwSpecific,* de coordonnées d'altitude, pour compléter les coordonnées géographiques de latitude et de longitude ;
- la valeur « 5 » est affectée à la transmission, dans le champ *GwSpecific,* à une information d'incertitude horizontale ;
- la valeur « 6 » est affectée à la transmission, dans le champ *GwSpecific,* à une information d'incertitude verticale, le paramètre *Loc_PosUncert* étant ainsi réparti sur deux balises distinctes ;
- la valeur « 7 » est affectée à la transmission, dans le champ *GwSpecific,* d'une information de différence des coordonnées de latitude et de longitude (transmises avec un champ *InfoDesc* de valeur « 0 », « 1 » ou « 2 ») avec les toutes dernières coordonnées de latitude et de longitude précédemment diffusées ; et
- la valeur « 8 » est affectée à la transmission, dans le champ *GwSpecific,* d'une information de différence d'altitude (transmises avec un champ *InfoDesc* de valeur « 4 ») avec les toutes dernières coordonnées d'altitude précédemment diffusées, le paramètre *Loc_LastPosDif* étant ainsi réparti sur deux balises distinctes.

Les valeurs diffusées apportant des précisions sur une antenne donnée parmi les antennes possibles de la passerelle de collecte en question, il est considéré que ces valeurs diffusées portent alors sur le dernier numéro d'antenne diffusé (selon si la valeur effective du dernier champ *InfoDesc* de valeur « 0 », « 1 » ou « 2 » diffusé).

Dans un second exemple d'adaptation du champ *InfoDesc :*

- la valeur « 3 » est affectée à la transmission, dans le champ *GwSpecific,* des paramètres *Loc_Intern, Loc_RAT, Loc_Meth* et *Loc_PosT ;*
- la valeur « 4 » est affectée à la transmission, dans le champ *GwSpecific,* de coordonnées d'altitude, pour compléter les coordonnées géographiques de latitude et de longitude, ainsi qu'au paramètre *Loc_PosUncert* sous la forme d'une information d'incertitude horizontale et d'une information d'incertitude verticale ; et
- la valeur « 5 » est affectée à la transmission, dans le champ *GwSpecific,* du paramètre *Loc_LastPosDif* sous la forme d'une information de différence des coordonnées de latitude et de longitude (transmises avec un champ *InfoDesc* de valeur « 0 » , « 1 » ou « 2 ») avec les toutes dernières coordonnées de latitude et de longitude précédemment diffusées et d'une information de différence d'altitude (transmises avec un champ *InfoDesc* de valeur « 4 ») avec les toutes dernières coordonnées d'altitude précédemment diffusées.

Les premier et second exemples de réalisation ci-dessus prennent le parti de conserver une taille de champ *GwSpecific* égale à sept octets (dont un octet est réservé au champ *InfoDesc*), et donc plusieurs transmissions de balises complémentaires successives sont nécessaires afin de véhiculer les informations obtenues dans les étapes 401 à 407. Les transmissions de balises étant peu fréquentes (d'après le protocole LoRaWAN (marque déposée) une période de cent vingt huit secondes s'écoule entre deux émissions de balise successives), il est avantageux pouvoir utiliser des balises de taille variable.

Ainsi, dans un troisième exemple d'adaptation du champ *InfoDesc* :

- la valeur « 3 » est affectée à la transmission, dans le champ *GwSpecific,* des paramètres *Loc_Intern, Loc_RAT, Loc_Meth* et *Loc_PosT ;*
- la valeur « 4 » est affectée à la transmission, dans le champ *GwSpecific,* de coordonnées d'altitude, pour compléter les coordonnées géographiques de latitude et de longitude, ainsi qu'au paramètre *Loc_PosUncert* sous la forme d'une information d'incertitude horizontale et d'une information d'incertitude verticale ;
- la valeur « 5 » est affectée à la transmission, dans le champ *GwSpecific,* du paramètre *Loc_LastPosDif* sous la forme d'une information de différence des coordonnées de latitude et de longitude (transmises avec un champ *InfoDesc* de valeur « 0 », « 1 » ou « 2 ») avec les toutes dernières coordonnées de latitude et de longitude précédemment diffusées et d'une information de différence d'altitude (transmises avec un champ *InfoDesc* de valeur « 4 ») avec les toutes dernières coordonnées d'altitude précédemment diffusées ; et
- la valeur « 127 » est affectée à un champ *GwSpecific* de taille paramétrable, le champ *GwSpecific* débutant alors par un sous-champ de taille prédéfinie et de valeur représentative de la taille effective dudit champ *GwSpecific,* le contenu du reste dudit champ *GwSpecific* étant agencé selon des règles prédéfinies en fonction de la taille effective dudit champ *GwSpecific.*

Dans un quatrième exemple d'adaptation du champ *InfoDesc :*

- la valeur « 0 » est réaffectée à la diffusion de coordonnées (latitude, longitude) de la première antenne de la passerelle de collecte émettant la balise en question, lesdites coordonnées étant obtenues grâce à une puce GPS interne à ladite passerelle de collecte ;
- la valeur « 1 » est réaffectée à la diffusion de coordonnées (latitude, longitude) de la seconde antenne de la passerelle de collecte émettant la balise en question, lesdites coordonnées étant obtenues grâce à une puce GPS interne à ladite passerelle de collecte ;
- la valeur « 2 » est réaffectée à la diffusion de coordonnées (latitude, longitude) de la troisième antenne de la passerelle de collecte émettant la balise en question, lesdites coordonnées étant obtenues grâce à une puce GPS interne à ladite passerelle de collecte ;
- la valeur « 3 » est affectée à la diffusion de coordonnées (latitude, longitude) de la première antenne de la passerelle de collecte émettant la balise en question, lesdites coordonnées étant obtenues grâce à une puce GPS externe à ladite passerelle de collecte ;
- la valeur « 4 » est affectée à la diffusion de coordonnées (latitude, longitude) de la première antenne de la passerelle de collecte émettant la balise en question, lesdites coordonnées étant obtenues, en interne de ladite passerelle de collecte, autrement que grâce à une puce GPS ; et
- la valeur « 5 » est affectée à la diffusion de coordonnées (latitude, longitude) de la première antenne de la passerelle de collecte émettant la balise en question, lesdites coordonnées étant obtenues, en externe de ladite passerelle de collecte, autrement que grâce à une puce GPS.

Ce quatrième exemple d'adaptation du champ *InfoDesc* peut être complété en affectant d'autres valeurs à la diffusion de coordonnées (latitude, longitude) de la seconde antenne et de la troisième antenne de la passerelle de collecte émettant la balise en question, en précisant par quel biais lesdites coordonnées ont été obtenues.

Ce quatrième exemple d'adaptation du champ *InfoDesc* peut aussi être modifié en supprimant l'affectation de la valeur « 5 » et en affectant la valeur « 4 » à la transmission de coordonnées (latitude, longitude) de la première antenne de la passerelle de collecte émettant la balise en question, lesdites coordonnées étant obtenues autrement que grâce à une puce GPS (peu importe que ce soit en interne ou en externe de ladite passerelle de collecte).

A noter que, dans les systèmes de communication dans lesquels les balises sont transmises sans chiffrement, les balises ainsi transmises par les passerelles de collecte desdits systèmes de communication peuvent être décodées par des équipements, dispositifs terminaux et/ou passerelles de collecte, d'un autre système de communication co-localisé. Cet autre système de communication co-localisé peut alors servir à un équipement, qui ne lui est pas rattaché mais qui utilise la même technologie de communication LPWAN, pour définir une référence temporelle et/ou au moins une référence spatiale.

La **Fig. 5** illustre schématiquement un algorithme de réception et de traitement de balises dans le système de communication. L'algorithme de la Fig. 5 est implémenté par un équipement désireux d'obtenir une référence temporelle et/ou au moins une référence spatiale, afin d'effectuer respectivement des opérations de synchronisation temps-fréquence et/ou de géolocalisation. Cela peut être un dispositif terminal ou une passerelle de collecte cherchant à déterminer sa propre géolocalisation. Cela peut être un dispositif terminal ou une passerelle de collecte cherchant à effectuer une synchronisation temps-fréquence vis-à-vis du système de communication. Considérons à titre illustratif que l'algorithme de la Fig. 5 est implémenté par le dispositif terminal 110.

Dans une étape 501, le dispositif terminal 110 reçoit une balise en provenance d'une passerelle de collecte. La balise en question peut avoir été transmise par une passerelle de collecte rattachée à un autre système de communication que celui auquel ledit dispositif terminal 110 est lui-même rattaché. La balise reçue à l'étape 501 a été envoyée conformément à l'algorithme décrit ci-dessus en relation avec la Fig. 4.

Dans une étape 502, le dispositif terminal 110 parcourt la balise reçue à l'étape 501 et en obtient une information de géolocalisation courante de la passerelle de collecte qui a transmis la balise reçue à l'étape 501, ou du moins, lorsque ladite passerelle de collecte dispose d'une antenne déportée, une information de géolocalisation courante de ladite antenne.

Dans une étape 503, le dispositif terminal 110 parcourt la balise reçue à l'étape 501 et en obtient l'information *Loc_RAT* représentative de la technologie de communication utilisée pour déterminer la géolocalisation courante de la passerelle de collecte ayant transmis la balise reçue à l'étape 501.

Dans une étape 504, le dispositif terminal 110 parcourt la balise reçue à l'étape 501 et en obtient l'information *Loc_Intern* indiquant si la géolocalisation courante de la passerelle de collecte ayant transmis la balise reçue à l'étape 501 a été déterminée grâce à des moyens internes à ladite passerelle de collecte, ou bien si la géolocalisation courante de la passerelle de collecte ayant transmis la balise reçue à l'étape 501 a été déterminée grâce à des moyens externes à ladite passerelle de collecte.

Dans une étape 505 optionnelle, le dispositif terminal 110 parcourt la balise reçue à l'étape 501 et en obtient l'information *Loc_Meth* représentative de l'algorithme de résolution utilisé pour déterminer la géolocalisation courante de la passerelle de collecte ayant transmis la balise reçue à l'étape 501.

Dans une étape 506 optionnelle, le dispositif terminal 110 parcourt la balise reçue à l'étape 501 et en obtient l'information *Loc_PosT* représentative de l'instant auquel la géolocalisation courante de la passerelle de collecte ayant transmis la balise reçue à l'étape 501 a été déterminée.

Dans une étape 507 optionnelle, le dispositif terminal 110 parcourt la balise reçue à l'étape 501 et en obtient l'information *Loc_LastPosDif* représentative de la différence éventuelle entre la géolocalisation courante de la passerelle de collecte ayant transmis la balise reçue à l'étape 501 et une géolocalisation précédente de ladite passerelle de collecte. Cela permet au dispositif terminal 110 d'avoir une estimation grossière de la stabilité de la géolocalisation de la passerelle de collecte ayant transmis la balise reçue à l'étape 501, sans avoir à observer et stocker les contenus de différentes balises successives. A la place, le dispositif terminal 110 peut obtenir une information représentative de ladite géolocalisation précédente.

Dans une étape 508 optionnelle, la passerelle de collecte 120 parcourt la balise reçue à l'étape 501 et en obtient une information *Loc_PosUncert* représentative d'une incertitude moyenne de géolocalisation vis-à-vis de la passerelle de collecte ayant transmis la balise reçue à l'étape 501.

Dans une variante de réalisation, les étapes 507 et 508 sont remplacées par une étape où le dispositif terminal 110 parcourt la balise reçue à l'étape 501 et en obtient le paramètre *Loc_Conv* indicateur de convergence des coordonnées géographiques de la passerelle de collecte ayant transmis la balise reçue à l'étape 501.

L'algorithme de la Fig. 5 est tel que les informations obtenues dans les étapes 502 à 508 sont insérées dans une même balise. Les informations obtenues dans les étapes 502 à 508 peuvent toutefois être réparties sur plusieurs balises successives, éventuellement avec une alternance avec des balises strictement conformes aux spécifications LoRaWAN 1.0.

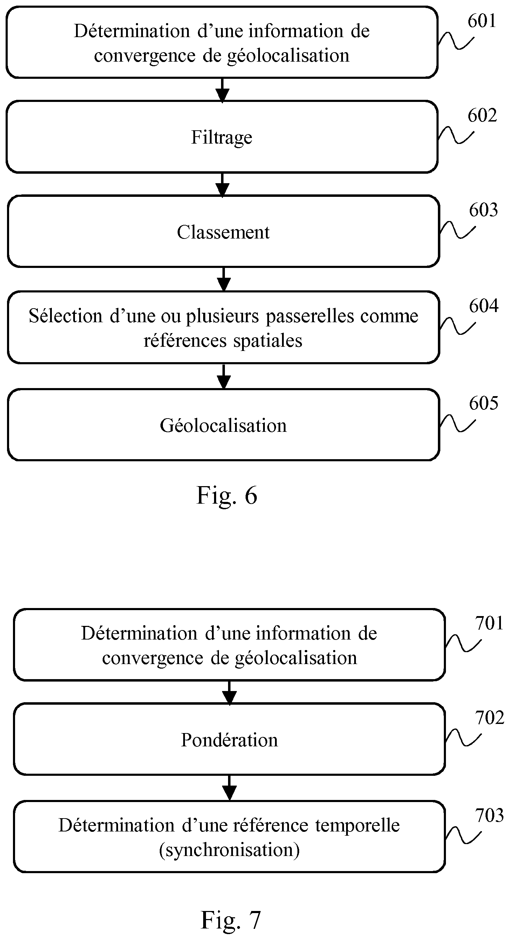

Dans une étape 509, le dispositif terminal 110 utilise les informations obtenues dans les étapes 502 à 508 pour définir une référence temporelle et/ou au moins une référence spatiale. Des modes de réalisation particuliers sont décrits ci-après en relation avec les Figs. 6 et 7.

Le dispositif terminal 100 peut déterminer sa propre position par des méthodes classiques de géolocalisation de type DRSS ou TDOA en se basant sur l'exploitation de signaux de référence, tels que les balises susmentionnées. Pour ce faire, le dispositif terminal 110 a besoin de connaître les positions géographiques des équipements ayant transmis ces signaux de référence. En exploitant les informations obtenues dans les étapes 502 à 508, le dispositif terminal 110 sélectionne les balises à considérer pour définir des références spatiales permettant d'obtenir sa propre géolocalisation. Au moins une de ces références spatiales peut être obtenue en exploitant les informations obtenues dans les étapes 502 à 508, d'autres peuvent être prédéfinies. Si les capacités de calcul du dispositif terminal 110 sont limitées, avoir un jeu de balises à traiter qui soit réduit mais fiable est avantageux, les méthodes de géolocalisation impliquant généralement des opérations d'inversion de matrice coûteuses en calculs et pouvant être instables.

De manière plus spécifique, les paramètres *Loc_RAT* et *Loc_Meth* permettent au dispositif terminal 110 de classifier les balises reçues en provenance de diverses passerelles de collecte, en préférant par exemple les balises transmises par des passerelles de collecte dont la position est obtenue par des technologies de communication dédiées (type GPS).

Pour des balises ayant des valeurs de paramètre *Loc_RAT* respectives identiques, le paramètre *Loc_PosT* permet de classer les balises en préférant les plus récentes.

Le paramètre *Loc_Intern* peut être utilisé en combinaison avec le paramètre *Loc_RAT* et éventuellement le paramètre *Loc_Meth*, pour permettre au dispositif terminal 110 d'affiner le classer les balises reçues, et ce, en fonction de la valeur du paramètre *Loc_RAT*. Par exemple, pour une technologie de communication à fin de géolocalisation de type GPS, il peut être plus avantageux de privilégier le fait que les coordonnées géographiques inscrites dans la balise aient été obtenues en interne, tandis que pour une technologie de communication de type LoRaWAN (marque déposée) avec un algorithme de résolution de type DRSS ou TDOA, il peut être plus avantageux de privilégier le fait que les coordonnées géographiques inscrites dans la balise aient été obtenues en externe car pouvant laisser envisager une plus grande précision (puissance de calcul par exemple), à comparer avec les valeurs du paramètre *Loc_PosUncert.*

Le paramètre *Loc_LastPosDif,* indirectement couplé au paramètre *Loc_PosT,* permet d'apprécier la dispersion ou la convergence de la méthode de géolocalisation employée par rapport aux incertitudes diffusées dans le paramètre *Loc_PosUncert.* Ainsi, si la différence de géolocalisation diffusée via le paramètre *Loc_LastPosDif* est supérieure aux incertitudes diffusées dans le paramètre *Loc_PosUncert* de la méthode de géolocalisation diffusée via les paramètres *Loc_RAT* et *Loc_Meth,* le dispositif terminal 110 peut estimer que la méthode de localisation de la passerelle de collecte ayant transmis la balise en question n'a pas encore convergée et par conséquent ne pas la considérer pour définir les références spatiales.

Les informations transmises dans de telles balises permettent ainsi au dispositif terminal 110 de mieux apprécier s'il doit considérer ou non les positions géographiques respectivement diffusée dans lesdites balises pour définir les références spatiales nécessaires à sa propre géolocalisation. Le dispositif terminal 110 peut ainsi plus facilement et efficacement construire une liste de balises candidates, tel que décrit ci-après en relation avec la Fig. 6.

Le dispositif terminal 110, cherchant une source de synchronisation temps-fréquence vis-à-vis du système de synchronisation peut également exploiter les informations transmises dans de telles balises, en se servant en particulier des paramètres *Loc_RAT, Loc_Meth* et *Loc_Intern.* En effet, si une balise en question indique que la position géographique diffusée a été obtenue grâce à une puce GPS intégrée à la passerelle de collecte ayant transmis ladite balise, le dispositif terminal 110 peut alors considérer que ladite passerelle de collecte dispose alors de capacités, matérielles et éventuellement logicielles, lui permettant d'exploiter le signal GPS pour sa propre géolocalisation et également pour se synchroniser en temps-fréquence vis-à-vis du système de communication. Le dispositif terminal 110 peut alors considérer, ou pondérer favorablement, la balise en question dans la définition d'une référence temporelle pour se synchroniser en temps-fréquence et ainsi corriger une horloge interne en cas de dérive. Une balise indiquant que la position géographique diffusée a été obtenue grâce à une puce GPS externe peut ne pas être considérée, ou être pondérée défavorablement, pour la synchronisation temps-fréquence du dispositif terminal 110 (absence de source directe de synchronisation temps-fréquence), la passerelle de collecte étant ainsi potentiellement asservie par des mécanismes de fiabilité inconnue.

Le dispositif terminal 110 peut ainsi pondérer les balises reçues pour définir une référence temporelle pour la synchronisation temps-fréquence du dispositif terminal 110, en favorisant les balises dont position géographique diffusée a été obtenue grâce à une puce GPS intégrée à la passerelle de collecte ayant transmis ladite balise, car cela suppose que la passerelle de collecte dispose d'une source de synchronisation précise. Disposant d'une telle source de synchronisation temps-fréquence, la passerelle de collecte en question peut être considérée comme générant des balises pouvant servir à la définition d'une référence temporelle dans un processus de synchronisation temps-fréquence *e.g.* par asservissement (ou « sniffing » en anglais), tel que décrit ci-après en relation avec la Fig. 7.

A noter que d'autres règles, basées sur les paramètres susmentionnés diffusés dans les balises du système de communication, peuvent être implémentées pour considérer ou pas, ou pondérer, lesdites balises dans la géolocalisation du dispositif terminal 110 et/ou la synchronisation temps-fréquence dudit dispositif terminal 110 vis-à-vis du système de communication.

La **Fig. 6** illustre schématiquement un algorithme de traitement de balises dans le système de communication, dans un premier mode de réalisation particulier de définition de références spatiales, afin d'effectuer des opérations de géolocalisation. L'algorithme de la Fig. 6 peut être exécuté par un dispositif terminal ou une passerelle de collecte cherchant à déterminer sa propre géolocalisation. Considérons à titre illustratif que l'algorithme de la Fig. 6 est implémenté par le dispositif terminal 110.

Dans une étape 601, pour chaque balise traitée dans le cadre de l'algorithme de la Fig. 5 (ou plusieurs balises successives si les paramètres susmentionnés sont diffusés via une succession de balises), le dispositif terminal 110 détermine une information de convergence de la géolocalisation diffusée dans ladite balise considérée. Les balises candidates comme références spatiales pour les opérations de géolocalisation dudit dispositif terminal 110 peuvent être les balises dont le paramètre *Loc_LastPosDif* en valeur absolue est inférieur ou égal au paramètre *Loc_PosUncert* en valeur absolue. Le même résultat est obtenu via le paramètre *Loc_Conv.*

Ainsi, dans une étape 602 optionnelle, le dispositif terminal 110 effectue un filtrage des balises reçues en fonction de l'information de convergence déterminée pour chaque dite balise à l'étape 601.

Dans une étape 603, le dispositif terminal 110 effectue un classement des balises restantes, après filtrage éventuel, au sein d'une liste selon un ensemble de règles prédéfinies, par exemple dans l'ordre de priorité suivant :

- en fonction du contenu des paramètres *Loc_RAT, Loc_Meth* et, en favorisant les balises diffusant des coordonnées géographiques déterminées grâce à une puce GPS ;
- puis en fonction du contenu du paramètre *Loc_LastPosDif,* en favorisant les balises diffusant des coordonnées géographiques les plus stables ;
- puis en fonction du contenu du paramètre *Loc_PosT,* en favorisant les balises diffusant des coordonnées géographiques les plus récentes ;
- puis en fonction du contenu du paramètre *Loc_Intern,* en favorisant les balises diffusant des coordonnées géographiques déterminées en interne.

Dans une étape 604, le dispositif terminal 110 s'appuie sur la liste triée obtenue à l'étape 603 pour sélectionner au moins une balise reçue comme référence spatiale. Le dispositif terminal 110 retient une quantité prédéterminée N (*e.g. N* = 5) de balises en tête de liste comme références spatiales pour ensuite obtenir sa propre géolocalisation. La quantité prédéterminée N permet d'établir un compromis efficacité / précision. Trois références spatiales au moins sont nécessaires pour permettre au dispositif terminal 110 d'obtenir sa propre localisation. Au moins une de ces références spatiales peut être sélectionnée parmi les balises ainsi reçues, les autres références spatiales étant alors prédéfinies ou connues du dispositif terminal 110 par un autre biais.

Dans une étape 605, le dispositif terminal 110 détermine sa propre géolocalisation en s'appuyant sur la sélection faite à l'étape 604, par exemple en utilisant des techniques de type DRSS ou TDOA.

La **Fig. 7** illustre schématiquement un algorithme de traitement de balises dans le système de communication, dans un second mode de réalisation particulier de définition d'une références temporelle, afin d'effectuer des opérations de synchronisation temps-fréquence. L'algorithme de la Fig. 7 peut être exécuté par un dispositif terminal ou une passerelle de collecte cherchant se synchroniser en temps-fréquence vis-à-vis du système de communication. Considérons à titre illustratif que l'algorithme de la Fig. 7 est implémenté par le dispositif terminal 110.

Dans une étape 701, pour chaque balise traitée dans le cadre de l'algorithme de la Fig. 5 (ou plusieurs balises successives si les paramètres susmentionnés sont diffusés via une succession de balises), le dispositif terminal 110 détermine une information de convergence de la géolocalisation diffusée dans ladite balise considérée. Les balises candidates comme référence temporelle pour les opérations de synchronisation temps-fréquence dudit dispositif terminal 110 peuvent être les balises dont le paramètre *Loc_LastPosDif* en valeur absolue est inférieur ou égal au paramètre *Loc_PosUncert* en valeur absolue. Le même résultat est obtenu via le paramètre *Loc_Conv.*

Dans une étape 702, pour chaque balise traitée dans le cadre de l'algorithme de la Fig. 5 (ou plusieurs balises successives si les paramètres susmentionnés sont diffusés via une succession de balises), le dispositif terminal 110 applique au moins un facteur de pondération.

Considérons à titre illustratif que le paramètre *Loc_Intern* prend la valeur « 1 » lorsque la géolocalisation de la passerelle de collecte en question a été obtenue en interne de ladite passerelle de collecte, et que le paramètre *Loc_Intern* prend la valeur « 0 » lorsque la géolocalisation de la passerelle de collecte en question a été obtenue en externe de ladite passerelle de collecte. Chaque balise transmise par une passerelle de collecte dont les coordonnées géographiques ont été obtenues grâce à une puce GPS est alors pondérée par le facteur de pondération suivant :

$\alpha_m$ (1 - $\alpha_i$ - *Loc_Intern* + 2. $\alpha_i$. *Loc_Intern*) (1 - $\alpha_c$ - *Loc_Conv* + 2. $\alpha_c$. *Loc_Conv)* et chaque autre balise est alors pondérée par le facteur de pondération suivant :

$\beta_m$ (1 - $\beta_i$ - *Loc_Intern* + 2. $\beta_i$. *Loc_Intern*)(1 - $\beta_c$ - *Loc_Conv* + 2. $\beta_c$. *Loc_Conv)* où $\alpha_m$, $\alpha_i$, $\alpha_c$, $\beta_m$, $\beta_i$

et $\beta_c$ sont des coefficients de pondération.

A noter que si le paramètre *Loc_Conv* n'est pas transmis, ce paramètre *Loc_Conv* peut être calculé par le dispositif terminal à partir des paramètres *Loc_LastPosDif* et *Loc_PosUncert* contenus dans la balise en question.

A noter que dans les formulations ci-dessus des facteurs de pondération :

- $\alpha_m > \beta_m$, ce qui permet de privilégier les balises diffusant des coordonnées géographiques obtenues grâce à une puce GPS ;
- $\alpha_i > 0{,}5$ et $\beta_i > 0{,}5$ permet de privilégier les balises diffusant des coordonnées géographiques obtenues en interne de la passerelle de collecte en question ;
- $\alpha_c > 0{,}5$ et $\beta_c > 0{,}5$ permet de privilégier les balises diffusant dont les coordonnées géographiques sont considérées comme stables.

Dans une étape 703, le dispositif terminal 110 détermine une référence temporelle pour se synchroniser en temps-fréquence (compenser d'éventuelles dérives d'horloge) vis-à-vis du système de communication, à partir des balises pondérées. Si le cadencement des balises transmises par une première passerelle de collecte montre une fréquence de synchronisation $f_1$ et qu'un facteur $\alpha_1$ est affecté aux balises transmises par ladite première passerelle de collecte, et si le cadencement des balises transmises par une seconde passerelle de collecte montre une fréquence de synchronisation $f_2$ et qu'un facteur $\alpha_2$ est affecté aux balises transmises par ladite seconde passerelle de collecte, alors le dispositif terminal 110 utilise comme référence temporelle une fréquence de synchronisation $f$ qui est la moyenne pondérée des fréquences de synchronisation $f_1$ et $f_2$, et donc telle que :

$$f = \frac{\alpha_1 . f_1 + \alpha_2 . f_2}{\alpha_1 + \alpha_2}$$

De la même manière, si le cadencement des balises transmises par une première passerelle de collecte montre un prochain instant $t_1$ de transmission de balises dans le système de communication et que le facteur $\alpha_1$ est affecté aux balises transmises par ladite première passerelle de collecte, et si le cadencement des balises transmises par une seconde passerelle de collecte montre un prochain instant $t_2$ de transmission de balises dans le système de communication et qu'un facteur $\alpha_2$ est affecté aux balises transmises par ladite seconde passerelle de collecte, alors le dispositif terminal 110 utilise comme référence temporelle un prochain instant t de transmission de balises dans le système de communication qui est la moyenne pondérée des instants $t_1$ et $t_2$, et donc telle que :

$$t = \frac{\alpha_1 . t_1 + \alpha_2 . t_2}{\alpha_1 + \alpha_2}$$

Une alternative à l'algorithme de la Fig. 7 est de sélectionner comme référence temporelle la balise qui est en haut de liste dans un classement des balises reçues, éventuellement après filtrage, selon le même principe que décrit ci-dessus en relation avec la Fig. 6 mais en appliquant des règles de tri différentes.

A noter aussi que, la technologie de communication LPWAN ayant une longue portée par définition, un équipement adapté à ladite technologie de communication LPWAN capte potentiellement plusieurs balises transmises par des passerelles de collecte de différents systèmes de communication à différents instants. Bien que transmises au même moment au sein d'un même système de communication en principe, un tel équipement peut potentiellement décoder chacune de ces balises en utilisant des stratégies de réception avancées (e.g. récepteur itératif à annulation successive d'interférence).

## Revendications

1. Procédé pour déterminer une référence temporelle et/ou au moins une référence spatiale, par un dispositif (110) d'un système de communication comportant une pluralité de passerelles de collecte (120, 121, 122) adaptées pour communiquer avec des dispositifs terminaux (110, 111) par communications sans-fil, chacune des passerelles de collecte étant configurée pour transmettre (408) au sein du système de communication des balises, dites de synchronisation, permettant à des dispositifs les recevant de se synchroniser en temps-fréquence vis-à-vis dudit système de communication,
le procédé étant tel que, pour chaque balise ou succession de balises d'une pluralité de balises ou succession de balises respectivement reçues en provenance de passerelles de collectes distinctes, ledit dispositif (110) effectue les étapes suivantes :

- parcourir ladite balise ou succession de balises et en obtenir (502) une information de géolocalisation courante de la passerelle de collecte (120) qui a transmis ladite balise ou succession de balises ;
- parcourir ladite balise ou succession de balises et en obtenir (503) une information représentative d'une technologie de communication utilisée pour déterminer la géolocalisation courante de la passerelle de collecte (120) ayant transmis ladite balise ou succession de balises ;
- parcourir ladite balise ou succession de balises et en obtenir (504) une information indiquant si la géolocalisation courante de la passerelle de collecte (120) ayant transmis ladite balise ou succession de balises a été déterminée grâce à des moyens internes à ladite passerelle de collecte (120), ou bien si la géolocalisation courante de la passerelle de collecte (120) ayant transmis ladite balise ou succession de balises a été déterminée grâce à des moyens externes à ladite passerelle de collecte (120) ;

et tel que le dispositif (110) utilise (509) les informations ainsi obtenues pour considérer ou pas, ou pondérer, les balises reçues, pour déterminer la référence temporelle pour synchroniser en temps-fréquence ledit dispositif (110) vis-à-vis dudit système de communication et/ou la ou les références spatiales pour déterminer la géolocalisation dudit dispositif (110).

2. Procédé selon la revendication 1, **caractérisé en ce que**, pour chaque balise ou succession de balises de ladite pluralité de balises, ledit dispositif (110) effectue en outre l'étape suivante :

> - parcourir ladite balise ou succession de balises et en obtenir (505) une information représentative d'un algorithme de résolution pour déterminer la géolocalisation courante de la passerelle de collecte (120) ayant transmis ladite balise ou succession de balises ;

et **en ce que** le dispositif (110) utilise (509) aussi ladite information ainsi obtenue pour déterminer la référence temporelle pour synchroniser en temps-fréquence ledit dispositif (110) vis-à-vis dudit système de communication et/ou la ou les références spatiales pour déterminer la géolocalisation dudit dispositif (110).

3. Procédé selon l'une quelconque des revendications 1 et 2, **caractérisé en ce que**, pour chaque balise ou succession de balises de ladite pluralité de balises, ledit dispositif (110) effectue en outre l'étape suivante :

> - parcourir ladite balise ou succession de balises et en obtenir (506) une information représentative d'un instant auquel la géolocalisation courante de la passerelle de collecte (120) ayant transmis ladite balise ou succession de balises a été déterminée ;

et **en ce que** le dispositif (110) utilise (509) aussi ladite information ainsi obtenue pour déterminer la référence temporelle pour synchroniser en temps-fréquence ledit dispositif (110) vis-à-vis dudit système de communication et/ou la ou les références spatiales pour déterminer la géolocalisation dudit dispositif (110).

4. Procédé selon l'une quelconque des revendications 1 à 3, **caractérisé en ce que**, pour chaque balise ou succession de balises de ladite pluralité de balises, ledit dispositif (110) effectue en outre l'étape suivante :

> - parcourir ladite balise ou succession de balises et en obtenir (507) une information représentative d'une différence éventuelle entre la géolocalisation courante de la passerelle de collecte (120) ayant transmis ladite balise ou succession de balises et une géolocalisation précédente de ladite passerelle de collecte (120) ;

et **en ce que** le dispositif (110) utilise (509) aussi ladite information ainsi obtenue pour déterminer la référence temporelle pour synchroniser en temps-fréquence ledit dispositif (110) vis-à-vis dudit système de communication et/ou la ou les références spatiales pour déterminer la géolocalisation dudit dispositif (110).

5. Procédé selon l'une quelconque des revendications 1 à 4, **caractérisé en ce que**, pour chaque balise ou succession de balises de ladite pluralité de balises, ledit dispositif (110) effectue en outre l'étape suivante :

> - parcourir ladite balise ou succession de balises et en obtenir (508) une information représentative d'une incertitude moyenne de géolocalisation vis-à-vis de la passerelle de collecte (120) ayant transmis ladite balise ou succession de balises ;

et **en ce que** le dispositif (110) utilise (509) aussi ladite information ainsi obtenue pour déterminer la référence temporelle pour synchroniser en temps-fréquence ledit dispositif (110) vis-à-vis dudit système de communication et/ou la ou les références spatiales pour déterminer la géolocalisation dudit dispositif (110).

6. Procédé selon l'une quelconque des revendications 1 à 3, **caractérisé en ce que**, pour chaque balise ou succession de balises de ladite pluralité de balises, ledit dispositif (110) effectue en outre l'étape suivante :

> - parcourir ladite balise ou succession de balises et en obtenir un indicateur de convergence des coordonnées géographiques de la passerelle de collecte (120) ayant transmis ladite balise ou succession de balises ;

et **en ce que** le dispositif (110) utilise (509) aussi ladite information ainsi obtenue pour déterminer la référence temporelle pour synchroniser en temps-fréquence ledit dispositif (110) vis-à-vis dudit système de communication et/ou la ou les références spatiales pour déterminer la géolocalisation dudit dispositif (110).

7. Procédé selon l'une quelconque des revendications 1 à 6, **caractérisé en ce que** le dispositif (110) détermine une information de convergence de la géolocalisation diffusée dans ladite balise ou succession de balises considérée et effectue (602) un filtrage des balises en fonction de l'information de convergence déterminée.

8. Procédé selon l'une quelconque des revendications 1 à 7, **caractérisé en ce que** le dispositif (110) effectue (603) un classement des balises au sein d'une liste selon un ensemble de règles prédéfinies, et **en ce que** le dispositif (110) retient (604) une quantité prédéterminée N de balises ou succession de balises en tête de liste pour déterminer la référence temporelle pour synchroniser en temps-fréquence ledit dispositif (110) vis-à-vis dudit système de communication et/ou la ou les références spatiales pour déterminer la géolocalisation dudit dispositif (110).

9. Procédé selon l'une quelconque des revendications 1 à 7, **caractérisé en ce que** le dispositif (110) applique (702) un facteur de pondération à chaque balise ou succession de balises retenue pour déterminer la référence temporelle pour synchroniser en temps-fréquence ledit dispositif (110) vis-à-vis dudit système de communication.

10. Procédé selon la revendication 9, **caractérisé en ce que** chaque balise reçue en provenance d'une passerelle de collecte (120) dont la géolocalisation courante a été obtenue grâce à une puce GPS est pondérée par le facteur de pondération suivant :

$\alpha_m$ (1 - $\alpha_i$ - Loc_Intern + 2. $\alpha_i$. Loc_Intern) (1 - $\alpha_c$ - Loc_Conv + 2.$\alpha_c$. Loc_Conv) et chaque autre balise est pondérée par le facteur de pondération suivant :
$\beta_m$ (1 - $\beta_i$ - Loc_Intern + 2. $\beta_i$. Loc_Intern)(1 - $\beta_c$ - Loc_Conv + 2. $\beta_c$. Loc_Conv) où $\alpha_m$, $\alpha_i$, $\alpha_c$, $\beta_m$, $\beta_i$ et $\beta_c$ sont des coefficients de pondération tels que :

- $\alpha_m > \beta_m$ ;
- $\alpha_i > 0{,}5$ et $\beta_i > 0{,}5$ ;
- $\alpha_c > 0{,}5$ et $\beta_c > 0{,}5$ ;

où Loc_Intern vaut « 1 » lorsque ladite géolocalisation courante a été déterminée grâce à des moyens internes à ladite passerelle de collecte (120) et vaut « 0 » lorsque ladite géolocalisation courante a été déterminée grâce à des moyens externes à ladite passerelle de collecte (120),

et où Loc_Conv est utilisé comme indicateur de convergence des coordonnées géographiques de la passerelle de collecte (120) ayant transmis ladite balise ou succession de balises, Loc_Conv valant « 1 » lorsque la différence en valeur absolue entre la géolocalisation courante de ladite passerelle de collecte (120) et une géolocalisation précédente de ladite passerelle de collecte (120) est inférieure ou égale à une incertitude moyenne de géolocalisation vis-à-vis de la passerelle de collecte (120), et vaut « 0 » sinon.

11. Dispositif (110) configuré pour déterminer une référence temporelle et/ou au moins une référence spatiale, le dispositif (110) étant destiné à être inclus dans un système de communication comportant en outre une pluralité de passerelles de collecte (120, 121, 122) adaptées pour communiquer avec des dispositifs terminaux (110, 111) par communications sans-fil, chacune des passerelles de collecte étant configurée pour transmettre (408) au sein du système de communication des balises, dites de synchronisation, permettant à des dispositifs les recevant de se synchroniser en temps-fréquence vis-à-vis dudit système de communication,
le dispositif étant tel que, pour chaque balise ou succession de balises d'une pluralité de balises ou succession de balises respectivement reçues en provenance de passerelles de collectes distinctes, ledit dispositif (110) implémente :

- des moyens pour parcourir ladite balise ou succession de balises et en obtenir (502) une information de géolocalisation courante de la passerelle de collecte (120) qui a transmis ladite balise ou succession de balises ;
- des moyens pour parcourir ladite balise ou succession de balises et en obtenir (503) une information représentative d'une technologie de communication utilisée pour déterminer la géolocalisation courante de la passerelle de collecte (120) ayant transmis ladite balise ou succession de balises ;
- des moyens pour parcourir ladite balise ou succession de balises et en obtenir (504) une information indiquant si la géolocalisation courante de la passerelle de collecte (120) ayant transmis ladite balise ou succession de balises a été déterminée grâce à des moyens internes à ladite passerelle de collecte (120), ou bien si la géolocalisation courante de la passerelle de collecte (120) ayant transmis ladite balise ou succession de balises a été déterminée grâce à des moyens externes à ladite passerelle de collecte (120) ;

et tel que le dispositif (110) est configuré pour utiliser (509) les informations ainsi obtenues pour considérer ou pas, ou pondérer, les balises reçues, pour déterminer la référence temporelle pour synchroniser en temps-fréquence ledit dispositif (110) vis-à-vis dudit système de communication et/ou la ou les références spatiales pour déterminer la géolocalisation dudit dispositif (110).

12. Procédé pour permettre à un dispositif (110) de déterminer une référence temporelle et/ou au moins une référence spatiale, par une passerelle de collecte (120) d'un système de communication comportant une pluralité de telles passerelles de collecte (120, 121, 122) adaptées pour communiquer avec des dispositifs terminaux (110, 111) par communications sans-fil, chacune des passerelles de collecte transmettant (408) au sein du système de communication des balises, dites de synchronisation, permettant à des dispositifs les recevant de se synchroniser en temps-fréquence vis-à-vis dudit système de communication,

le procédé étant tel que ladite passerelle de collecte (120) effectue les étapes suivantes :

- obtenir (401) une information de géolocalisation courante de ladite passerelle de collecte (120) ;
- obtenir (402) une information représentative d'une technologie de communication utilisée pour déterminer la géolocalisation courante de ladite passerelle de collecte (120) ;
- obtenir (403) une information indiquant si la géolocalisation courante de ladite passerelle de collecte (120) a été déterminée grâce à des moyens internes à ladite passerelle de collecte (120), ou bien si la géolocalisation courante de ladite passerelle de collecte (120) a été déterminée grâce à des moyens externes à ladite passerelle de collecte (120) ;

et tel que ladite passerelle de collecte (120) transmet (408) les informations ainsi obtenues dans une balise ou une succession de balises audit dispositif, afin de permettre audit dispositif d'utiliser lesdites informations pour déterminer la référence temporelle pour se synchroniser en temps-fréquence vis-à-vis dudit système de communication et/ou la ou les références spatiales pour déterminer la géolocalisation dudit dispositif, et en ce que ledit dispositif implémente le procédé selon la revendication 1.

13. Système comportant un dispositif selon la revendication 11 et une passerelle de collecte (120) configurée pour permettre audit dispositif (110) de déterminer une référence temporelle et/ou au moins une référence spatiale, la passerelle de collecte (120) étant destinée à être incluse dans un système de communication comportant une pluralité de telles passerelles de collecte (120, 121, 122) adaptées pour communiquer avec des dispositifs terminaux (110, 111) par communications sans-fil, chacune des passerelles de collecte étant configurée pour transmettre (408) au sein du système de communication des balises, dites de synchronisation, permettant à des dispositifs les recevant de se synchroniser en temps-fréquence vis-à-vis dudit système de communication,

le système étant tel que ladite passerelle de collecte (120) implémente :

- des moyens pour obtenir (401) une information de géolocalisation courante de ladite passerelle de collecte (120) ;
- des moyens pour obtenir (402) une information représentative d'une technologie de communication utilisée pour déterminer la géolocalisation courante de ladite passerelle de collecte (120) ;
- des moyens pour obtenir (403) une information indiquant si la géolocalisation courante de ladite passerelle de collecte (120) a été déterminée grâce à des moyens internes à ladite passerelle de collecte (120), ou bien si la géolocalisation courante de ladite passerelle de collecte (120) a été déterminée grâce à des moyens externes à ladite passerelle de collecte (120) ;

et tel que ladite passerelle de collecte (120) implémente des moyens pour transmettre (408) les informations ainsi obtenues dans une balise ou une succession de balises audit dispositif, afin de permettre audit dispositif d'utiliser lesdites informations pour déterminer la référence temporelle pour se synchroniser en temps-fréquence vis-à-vis dudit système de communication et/ou la ou les références spatiales pour déterminer la géolocalisation dudit dispositif.

14. Produit programme d'ordinateur comportant un ensemble d'instructions causant l'exécution, par un processeur (201) d'un dispositif (110, 120) destiné à être inclus dans un système de communication, du procédé selon l'une quelconque des revendications 1 à 10, lorsque ledit programme d'ordinateur est exécuté par ledit processeur.

15. Moyens de stockage d'informations stockant un programme d'ordinateur comportant un ensemble d'instructions causant l'exécution, par un processeur (201) d'un dispositif (110, 120) destiné à être inclus dans un système de communication, du procédé selon l'une quelconque des revendications 1 à 10, lorsque ledit programme d'ordinateur est exécuté par ledit processeur.

**Patentansprüche**

1. Verfahren zur Bestimmung einer zeitlichen Referenz und/oder mindestens einer räumlichen Referenz durch eine Vorrichtung (110) eines Kommunikationssystems, das eine Vielzahl von Sammelgateways (120, 121, 122) aufweist, die geeignet sind, über drahtlose Kommunikationen mit Endvorrichtungen (110, 111) zu kommunizieren,

wobei jedes der Sammelgateways konfiguriert ist, innerhalb des Kommunikationssystems so genannte Synchronisationsbeacons zu übertragen (408), die es sie empfangenden Vorrichtungen ermöglichen, sich in Zeit und Frequenz gegenüber dem Kommunikationssystem zu synchronisieren,

wobei das Verfahren derart ist, dass für jedes Beacon oder Folge von Beacons einer Vielzahl von Beacons oder Folge von Beacons, die je von unterschiedlichen Sammelgateways empfangen werden, die Vorrichtung (110) die folgenden Schritte ausführt:

    - das Beacon oder die Folge von Beacons zu durchlaufen und von ihnen einer Information über eine aktuelle Geolokalisierung des Sammelgateways (120) zu erhalten (502), das das Beacon oder die Folge von Beacons übertragen hat;

    - das Beacon oder die Folge von Beacons zu durchlaufen und von ihnen eine Information zu erhalten (503), die für eine Kommunikationstechnologie repräsentativ ist, die verwendet wird, um die aktuelle Geolokalisierung des Sammelgateways (120) zu bestimmen, das das Beacon oder die Folge von Beacons übertragen hat;

    - das Beacon oder die Folge von Beacons zu durchlaufen und von ihnen eine Information zu erhalten (504), die anzeigt, ob die aktuelle Geolokalisierung des Sammelgateways (120), das das Beacon oder die Folge von Beacons übertragen hat, mit Hilfe von Einrichtungen innerhalb des Sammelgateways (120) bestimmt wurde, oder ob die aktuelle Geolokalisierung des Sammelgateways (120), das das Beacon oder die Folge von Beacons übertragen hat, mit Hilfe von Einrichtungen außerhalb des Sammelgateways (120) bestimmt wurde;

und derart ist, dass die Vorrichtung (110) die so erhaltenen Informationen verwendet (509), um die empfangenen Beacons zu berücksichtigen oder nicht oder zu gewichten, um die zeitliche Referenz für die Zeit-Frequenz-Synchronisation der Vorrichtung (110) gegenüber dem Kommunikationssystem und/oder die räumliche(n) Referenz(en) zu bestimmen, um die Geolokalisierung der Vorrichtung (110) zu bestimmen.

**2.** Verfahren nach Anspruch 1, **dadurch gekennzeichnet, dass** die Vorrichtung (110) für jedes Beacon oder Folge von Beacons der Vielzahl von Beacons außerdem den folgenden Schritt ausführt:

    - das Beacon oder die Folge von Beacons zu durchlaufen und von ihnen eine für einen Auflösungsalgorithmus repräsentative Information zu erhalten (505), um die aktuelle Geolokalisierung des Sammelgateways (120) zu bestimmen, das das Beacon oder die Folge von Beacons übertragen hat;

und dass die Vorrichtung (110) auch die so erhaltene Information verwendet (509), um die zeitliche Referenz für die Zeit-Frequenz-Synchronisation der Vorrichtung (110) gegenüber dem Kommunikationssystem und/oder die räumliche(n) Referenz(en) zu bestimmen, um die Geolokalisierung der Vorrichtung (110) zu bestimmen.

**3.** Verfahren nach einem der Ansprüche 1 und 2, **dadurch gekennzeichnet, dass** die Vorrichtung (110) für jedes Beacon oder Folge von Beacons der Vielzahl von Beacons außerdem den folgenden Schritt ausführt:

    - das Beacon oder die Folge von Beacons zu durchlaufen und von ihnen eine Information zu erhalten (506), die für einen Zeitpunkt repräsentativ ist, zu dem die aktuelle Geolokalisierung des Sammelgateways (120), das das Beacon oder die Folge von Beacons übertragen hat, bestimmt wurde;

und dass die Vorrichtung (110) auch die so erhaltene Information verwendet (509), um die zeitliche Referenz für die Zeit-Frequenz-Synchronisation der Vorrichtung (110) gegenüber dem Kommunikationssystem und/oder die räumliche(n) Referenz(en) zu bestimmen, um die Geolokalisierung der Vorrichtung (110) zu bestimmen.

**4.** Verfahren nach einem der Ansprüche 1 bis 3, **dadurch gekennzeichnet, dass** die Vorrichtung (110) für jedes Beacon oder Folge von Beacons der Vielzahl von Beacon außerdem den folgenden Schritt ausführt:

    - das Beacon oder die Folge von Beacons zu durchlaufen und davon eine Information zu erhalten (507), die für eine mögliche Differenz zwischen der aktuellen Geolokalisierung des Sammelgateways (120), das das Beacon oder die Folge von Beacons übertragen hat, und einer vorhergehenden Geolokalisierung des Sammelgateways (120) repräsentativ ist;

und dass die Vorrichtung (110) auch die so erhaltene Information verwendet (509), um die zeitliche Referenz für die Zeit-Frequenz-Synchronisation der Vorrichtung (110) gegenüber dem Kommunikationssystem und/oder die räumliche(n) Referenz(en) zu bestimmen, um die Geolokalisierung der Vorrichtung (110) zu bestimmen.

5. Verfahren nach einem der Ansprüche 1 bis 4, **dadurch gekennzeichnet, dass** die Vorrichtung (110) für jedes Beacon oder Folge von Beacons der Vielzahl von Beacons außerdem den folgenden Schritt ausführt:

- das Beacon oder die Folge von Beacons zu durchlaufen und von ihnen eine Information zu erhalten (508), die für eine mittlere Unsicherheit der Geolokalisierung gegenüber dem Sammelgateway (120) repräsentativ ist, das das Beacon oder die Folge von Beacons übertragen hat;

und dass die Vorrichtung (110) auch die so erhaltene Information verwendet (509), um die zeitliche Referenz für die Zeit-Frequenz-Synchronisation der Vorrichtung (110) gegenüber dem Kommunikationssystem und/oder die räumliche(n) Referenz(en) zu bestimmen, um die Geolokalisierung der Vorrichtung (110) zu bestimmen.

6. Verfahren nach einem der Ansprüche 1 bis 3, **dadurch gekennzeichnet, dass** für jedes Beacon oder Folge von Beacons der Vielzahl von Beacons die Vorrichtung (110) außerdem den folgenden Schritt ausführt:

- das Beacon oder die Folge von Beacons zu durchlaufen und von ihnen einen Konvergenzanzeiger der geographischen Koordinaten des Sammelgateways (120) zu erhalten, das das Beacon oder die Folge von Beacons übertragen hat;

und dass die Vorrichtung (110) auch die so erhaltene Information verwendet (509), um die zeitliche Referenz für die Zeit-Frequenz-Synchronisation der Vorrichtung (110) gegenüber dem Kommunikationssystem und/oder die räumliche(n) Referenz(en) zu bestimmen, um die Geolokalisierung der Vorrichtung (110) zu bestimmen.

7. Verfahren nach einem der Ansprüche 1 bis 6, **dadurch gekennzeichnet, dass** die Vorrichtung (110) eine Konvergenzinformation der im betrachteten Beacon oder der Folge von Beacons verbreiteten Geolokalisierung bestimmt und eine Filterung der Beacons abhängig von der bestimmten Konvergenzinformation ausführt (602).

8. Verfahren nach einem der Ansprüche 1 bis 7, **dadurch gekennzeichnet, dass** die Vorrichtung (110) eine Einordnung der Beacons innerhalb einer Liste gemäß einer Einheit von vordefinierten Regeln ausführt (603), und dass die Vorrichtung (110) eine vorbestimmte Menge N von Beacons oder Folge von Beacons am Anfang der Liste wählt (604), um die zeitliche Referenz für die Zeit-Frequenz-Synchronisation der Vorrichtung (110) gegenüber dem Kommunikationssystem und/oder die räumliche(n) Referenz(en) zu bestimmen, um die Geolokalisierung der Vorrichtung (110) zu bestimmen.

9. Verfahren nach einem der Ansprüche 1 bis 7, **dadurch gekennzeichnet, dass** die Vorrichtung (110) einen Gewichtungsfaktor an jedes gewählte Beacon oder Folge von Beacons anwendet (702), um die zeitliche Referenz für die Zeit-Frequenz-Synchronisation der Vorrichtung (110) gegenüber dem Kommunikationssystem zu bestimmen.

10. Verfahren nach Anspruch 9, **dadurch gekennzeichnet, dass** jedes von einem Sammelgateway (120) kommend empfangene Beacon, dessen aktuelle Geolokalisierung mit Hilfe eines GPS-Chips erhalten wurde, mit dem folgenden Gewichtungsfaktor gewichtet wird:
$\alpha_m(1-\alpha_i\cdot\text{Loc\_Intern}+2\cdot\alpha_i\cdot\text{Loc\_Intern})(1-\alpha_c\cdot\text{Loc\_Conv}+2\cdot\alpha_c\cdot\text{Loc\_Conv})$
und jedes andere Beacon mit dem folgenden Gewichtungsfaktor gewichtet wird:
$\beta_m(1-\beta_i\cdot\text{Loc\_Intern}+2\cdot\beta_i\cdot\text{Loc\_Intern})(1-\beta_c\cdot\text{Loc\_Conv}+2\cdot\beta_c\cdot\text{Loc\_Conv})$
wobei $\alpha_m$, $\alpha_i$, $\alpha_c$, $\beta_m$, $\beta_i$ und $\beta_c$ Gewichtungskoeffizienten sind, derart, dass gilt:

- $\alpha_m > \beta_m$;
- $\alpha_i > 0,5$ und $\beta_i > 0,5$;
- $\alpha_c > 0,5$ und $\beta_c > 0,5$;

wobei Loc_Intern den Wert "1" hat, wenn die aktuelle Geolokalisierung mithilfe von Einrichtungen innerhalb des Sammelgateways (120) bestimmt wurde, und den Wert "0" hat, wenn die aktuelle Geolokalisierung mit Hilfe von Einrichtungen außerhalb des Sammelgateways (120) bestimmt wurde, und wobei Loc_Conv als Konvergenzindikator der geographischen Koordinaten des Sammelgateways (120) verwendet wird, das das Beacon oder die Folge von Beacons übertragen hat, wobei Loc_Conv den Wert "1" hat, wenn die Differenz des Absolutwerts zwischen der aktuellen Geolokalisierung des Sammelgateways (120) und einer vorhergehenden Geolokalisierung des Sammelgateways (120) geringer als die oder gleich einer mittleren Unsicherheit der Geolokalisierung gegenüber dem Sammelgateway (120) ist, und ansonsten den Wert "0" hat.

11. Vorrichtung (110), die konfiguriert ist, eine zeitliche Referenz und/oder mindestens eine räumliche Referenz zu bestimmen, wobei die Vorrichtung (110) dazu bestimmt ist, in einem Kommunikationssystem enthalten zu sein, das außerdem eine Vielzahl von Sammelgateways (120, 121, 122) aufweist, die geeignet sind, durch drahtlose Kommunikationen mit Endvorrichtungen (110, 111) zu kommunizieren, wobei jedes der Sammelgateways konfiguriert ist, innerhalb des Kommunikationssystems so genannte Synchronisationsbeacons zu übertragen (408), die es sie empfangenden Vorrichtungen ermöglichen, sich in Zeit und Frequenz gegenüber dem Kommunikationssystem zu synchronisieren, wobei die Vorrichtung derart ist, dass für jedes Beacon oder jede Folge von Beacons einer Vielzahl von Beacons oder Folge von Beacons, die je von unterschiedlichen Sammelgateways kommend empfangen wurden, die Vorrichtung (110) implementiert:

- Einrichtungen, um das Beacon oder die Folge von Beacons zu durchlaufen und von ihnen eine aktuelle Geolokalisierungsinformation des Sammelgateways (120) zu erhalten (502), das das Beacon oder die Folge von Beacons übertragen hat;
- Einrichtungen, um das Beacon oder die Folge von Beacons zu durchlaufen und von ihnen eine Information zu erhalten (503), die für eine Kommunikationstechnologie repräsentativ ist, die verwendet wird, um die aktuelle Geolokalisierung des Sammelgateways (120) zu bestimmen, das das Beacon oder die Folge von Beacons übertragen hat;
- Einrichtungen, um das Beacon oder die Folge von Beacons zu durchlaufen und von ihnen eine Information zu erhalten (504), die anzeigt, ob die aktuelle Geolokalisierung des Sammelgateways (120), das das Beacon oder die Folge von Beacons übertragen hat, mit Hilfe von Einrichtungen innerhalb des Sammelgateways (120) bestimmt wurde, oder aber ob die aktuelle Geolokalisierung des Sammelgateways (120), das das Beacon oder die Folge von Beacons übertragen hat, mit Hilfe von Einrichtungen außerhalb des Sammelgateways (120) bestimmt wurde;

und derart ist, dass die Vorrichtung (110) konfiguriert ist, die so erhaltenen Informationen zu verwenden (509), um die empfangenen Beacons zu berücksichtigen oder nicht oder zu gewichten, um die zeitliche Referenz für die Zeit-Frequenz-Synchronisation der Vorrichtung (110) gegenüber dem Kommunikationssystem und/oder die räumliche(n) Referenz(en) zu bestimmen, um die Geolokalisierung der Vorrichtung (110) zu bestimmen.

12. Verfahren, um es einer Vorrichtung (110) zu ermöglichen, eine zeitliche Referenz und/oder mindestens eine räumliche Referenz durch ein Sammelgateway (120) eines Kommunikationssystems zu bestimmen, das eine Vielzahl solcher Sammelgateways (120, 121, 122) aufweist, die geeignet sind, über drahtlose Kommunikationen mit Endvorrichtungen (110, 111) zu kommunizieren, wobei jedes der Sammelgateways innerhalb des Kommunikationssystem sogenannte Synchronisationsbeacons überträgt (408), die es sie empfangenden Vorrichtungen ermöglichen, sich gegenüber dem Kommunikationssystem in Zeit und Frequenz zu synchronisieren, wobei das Verfahren derart ist, dass das Sammelgateway (120) die folgenden Schritte ausführt:

- eine aktuelle Geolokalisierungsinformation des Sammelgateways (120) zu erhalten (401);
- eine Information zu erhalten (402), die für eine Kommunikationstechnologie repräsentativ ist, die verwendet wird, um die aktuelle Geolokalisierung des Sammelgateways (120) zu bestimmen;
- eine Information zu erhalten (403), die anzeigt, ob die aktuelle Geolokalisierung des Sammelgateways (120) mit Hilfe von Einrichtungen innerhalb des Sammelgateways (120) bestimmt wurde, oder aber ob die aktuelle Geolokalisierung des Sammelgateways (120) mit Hilfe von Einrichtungen außerhalb des Sammelgateways (120) bestimmt wurde;

und derart, dass das Sammelgateway (120) die so erhaltenen Informationen in einem Beacon oder einer Folge von Beacons an die Vorrichtung überträgt (408), um es der Vorrichtung zu ermöglichen, die Informationen zu verwenden, um die zeitliche Referenz für die Zeit-Frequenz-Synchronisation gegenüber dem Kommunikationssystem und/oder die räumliche(n) Referenz(en) zu bestimmen, um die Geolokalisierung der Vorrichtung zu bestimmen, und dass die Vorrichtung das Verfahren nach Anspruch 1 implementiert.

13. System, das eine Vorrichtung nach Anspruch 11 und ein Sammelgateway (120) aufweist, das konfiguriert ist, der Vorrichtung (110) zu ermöglichen, eine zeitliche Referenz und/oder mindestens eine räumliche Referenz zu bestimmen, wobei das Sammelgateway (120) dazu bestimmt ist, in einem Kommunikationssystem enthalten zu sein, das eine Vielzahl solcher Sammelgateways (120, 121, 122) aufweist, die geeignet sind, durch drahtlose Kommunikation mit Endvorrichtungen (110, 111) zu kommunizieren, wobei jedes der Sammelgateways konfiguriert ist, innerhalb des Kommunikationssystems so genannte Synchronisationsbeacons zu übertragen (408), die es sie empfangenden Vorrichtungen ermöglichen, sich gegenüber dem Kommunikationssystem in Zeit und Frequenz zu synchronisieren,

wobei das System derart ist, dass das Sammelgateway (120) implementiert:

- Einrichtungen zum Erhalt (401) einer Information über die aktuelle Geolokalisierung des Sammelgateways (120);
- Einrichtungen zum Erhalt (402) einer Information, die für eine Kommunikationstechnologie repräsentativ ist, die verwendet wird, um die aktuelle Geolokalisierung des Sammelgateways (120) zu bestimmen;
- Einrichtungen zum Erhalt (403) einer Information, die anzeigt, ob die aktuelle Geolokalisierung des Sammelgateways (120) mit Hilfe von Einrichtungen innerhalb des Sammelgateways (120) bestimmt wurde, oder aber ob die aktuelle Geolokalisierung des Sammelgateways (120) mit Hilfe von Einrichtungen außerhalb des Sammelgateways (120) bestimmt wurde;

und derart, dass das Sammelgateway (120) Einrichtungen implementiert, um die so erhaltenen Informationen in einem Beacon oder einer Folge von Beacons an die Vorrichtung zu übertragen (408), um der Vorrichtung zu ermöglichen, die Informationen zu verwenden, um die zeitliche Referenz für die Zeit-Frequenz-Synchronisation gegenüber dem Kommunikationssystem und/oder die räumliche(n) Referenz(en) zu bestimmen, um die Geolokalisierung der Vorrichtung zu bestimmen.

14. Computerprogrammprodukt, das eine Einheit von Anweisungen aufweist, die die Ausführung des Verfahrens nach einem der Ansprüche 1 bis 10 durch einen Prozessor (201) einer Vorrichtung (110, 120) veranlassen, die dazu bestimmt ist, in einem Kommunikationssystem enthalten zu sein, wenn das Computerprogramm vom Prozessor ausgeführt wird.

15. Informationsspeichereinrichtungen, die ein Computerprogramm speichern, das eine Einheit von Anweisungen aufweist, die die Ausführung des Verfahrens nach einem der Ansprüche 1 bis 10 durch einen Prozessor (201) einer Vorrichtung (110, 120) veranlassen, die dazu bestimmt ist, in einem Kommunikationssystem enthalten zu sein, wenn das Computerprogramm vom Prozessor ausgeführt wird.

**Claims**

1. Method for determining a temporal reference and/or at least one spatial reference, by means of a device (110) of a communication system comprising a plurality of collection gateways (120, 121, 122) designed to communicate with terminal devices (110, 111) by means of wireless communications, each one of the collection gateways being configured to transmit (408), within the communication system, beacons, referred to as synchronization beacons, allowing devices receiving them to synchronize in time and frequency with respect to said communication system,
the method being such that, for each beacon or series of beacons from a plurality of beacons or series of beacons respectively received from different collection gateways, said device (110) performs the following steps:

- scanning said beacon or series of beacons and obtaining (502) therefrom information about the current geolocation of the collection gateway (120) which transmitted said beacon or series of beacons;
- scanning said beacon or series of beacons and obtaining (503) therefrom information representative of a communication technology used to determine the current geolocation of the collection gateway (120) which transmitted said beacon or series of beacons;
- scanning said beacon or series of beacons and obtaining (504) therefrom information indicating whether the current geolocation of the collection gateway (120) which transmitted said beacon or series of beacons was determined with the aid of means internal to said collection gateway (120), or else whether the current geolocation of the collection gateway (120) which transmitted said beacon or series of beacons was determined with the aid of means external to said collection gateway (120);

and such that the device (110) uses (509) the information thus obtained to consider or not consider, or weight, the received beacons, to determine the temporal reference in order to synchronize said device (110) in time and frequency with respect to said communication system and/or the one or more spatial references to determine the geolocation of said device (110).

2. Method according to Claim 1, **characterized in that**, for each beacon or series of beacons from said plurality of beacons, said device (110) further performs the following step:

- scanning said beacon or series of beacons and obtaining (505) therefrom information representative of a resolution algorithm to determine the current geolocation of the collection gateway (120) which transmitted said beacon or series of beacons;

and **in that** the device (110) also uses (509) said information thus obtained to determine the temporal reference in order to synchronize said device (110) in time and frequency with respect to said communication system and/or the one or more spatial references to determine the geolocation of said device (110).

3. Method according to either one of Claims 1 and 2, **characterized in that**, for each beacon or series of beacons from said plurality of beacons, said device (110) further performs the following step:

- scanning said beacon or series of beacons and obtaining (506) therefrom information representative of an instant at which the current geolocation of the collection gateway (120) which transmitted said beacon or series of beacons was determined;

and **in that** the device (110) also uses (509) said information thus obtained to determine the temporal reference in order to synchronize said device (110) in time and frequency with respect to said communication system and/or the one or more spatial references to determine the geolocation of said device (110).

4. Method according to any one of Claims 1 to 3, **characterized in that**, for each beacon or series of beacons from said plurality of beacons, said device (110) further performs the following step:

- scanning said beacon or series of beacons and obtaining (507) therefrom information representative of a possible difference between the current geolocation of the collection gateway (120) which transmitted said beacon or series of beacons and a previous geolocation of said collection gateway (120);

and **in that** the device (110) also uses (509) said information thus obtained to determine the temporal reference in order to synchronize said device (110) in time and frequency with respect to said communication system and/or the one or more spatial references to determine the geolocation of said device (110).

5. Method according to any one of Claims 1 to 4, **characterized in that**, for each beacon or series of beacons from said plurality of beacons, said device (110) further performs the following step:

- scanning said beacon or series of beacons and obtaining (508) therefrom information representative of an average geolocation uncertainty with respect to the collection gateway (120) which transmitted said beacon or series of beacons;

and **in that** the device (110) also uses (509) said information thus obtained to determine the temporal reference in order to synchronize said device (110) in time and frequency with respect to said communication system and/or the one or more spatial references to determine the geolocation of said device (110).

6. Method according to any one of Claims 1 to 3, **characterized in that**, for each beacon or series of beacons from said plurality of beacons, said device (110) further performs the following step:

- scanning said beacon or series of beacons and obtaining therefrom an indicator of the convergence of the geographic coordinates of the collection gateway (120) which transmitted said beacon or series of beacons;

and **in that** the device (110) also uses (509) said information thus obtained to determine the temporal reference in order to synchronize said device (110) in time and frequency with respect to said communication system and/or the one or more spatial references to determine the geolocation of said device (110).

7. Method according to any one of Claims 1 to 6, **characterized in that** the device (110) determines information about the convergence of the geolocation broadcast in said beacon or series of beacons under consideration and filters (602) the beacons depending on the determined convergence information.

8. Method according to any one of Claims 1 to 7, **characterized in that** the device (110) classifies (603) the beacons within a list according to a set of predefined rules, and **in that** the device (110) retains (604) a predefined number N of beacons or series of beacons at the top of the list to determine the temporal reference in order to synchronize said device (110) in time and frequency with respect to said communication system and/or the one or more spatial references to determine the geolocation of said device (110).

9. Method according to any one of Claims 1 to 7, **characterized in that** the device (110) applies (702) a weighting factor to each beacon or series of beacons retained to determine the temporal reference in order to synchronize said device (110) in time and frequency with respect to said communication system.

10. Method according to Claim 9, **characterized in that** each beacon received from a collection gateway (120) the current geolocation of which was obtained with the aid of a GPS chip is weighted with the following weighting factor:

$\alpha_m(1 - \alpha_i - Loc\_Intern + 2.\alpha_i.Loc\_Intern)(1 - \alpha_c - Loc\_Conv + 2.\alpha_c.Loc\_Conv)$

and every other beacon is weighted with the following weighting factor:

$\beta_m(1 - \beta_i - Loc\_Intern + 2\,\beta_i.Loc\text{-}Intern)(1 - \beta_c - Loc\_Conv + 2\,\beta_c.Loc\_Conv)$

where $\alpha_m$, $\alpha_i$, $\alpha_c$, $\beta_m$, $\beta_i$ and $\beta_c$ are weighting coefficients such that:

- $\alpha_m > \beta_m$;
- $\alpha_i > 0.5$ and $\beta_i > 0.5$;
- $\alpha_c > 0.5$ and $\beta_c > 0.5$;

where *Loc_Intern* is "1" when said current geolocation was determined with the aid of means internal to said collection gateway (120) and is "0" when said current geolocation was determined with the aid of means external to said collection gateway (120), and where *Loc_Conv* is used as an indicator of the convergence of the geographical coordinates of the collection gateway (120) which transmitted said beacon or series of beacons, *Loc_Conv* being "1" when the difference in absolute value between the current geolocation of said collection gateway (120) and a preceding geolocation of said collection gateway (120) is less than or equal to an average geolocation uncertainty with respect to the collection gateway (120), and is "0" otherwise.

11. Device (110) configured to determine a temporal reference and/or at least one spatial reference, the device (110) being intended to be included in a communication system further comprising a plurality of collection gateways (120, 121, 122) designed to communicate with terminal devices (110, 111) by means of wireless communications, each one of the collection gateways being configured to transmit (408), within the communication system, beacons, referred to as synchronization beacons, allowing devices receiving them to synchronize in time and frequency with respect to said communication system, the device being such that, for each beacon or series of beacons from a plurality of beacons or series of beacons respectively received from different collection gateways, said device (110) implements:

- means for scanning said beacon or series of beacons and obtaining (502) therefrom information about the current geolocation of the collection gateway (120) which transmitted said beacon or series of beacons;
- means for scanning said beacon or series of beacons and obtaining (503) therefrom information representative of a communication technology used to determine the current geolocation of the collection gateway (120) which transmitted said beacon or series of beacons;
- means for scanning said beacon or series of beacons and obtaining (504) therefrom information indicating whether the current geolocation of the collection gateway (120) which transmitted said beacon or series of beacons was determined with the aid of means internal to said collection gateway (120), or else whether the current geolocation of the collection gateway (120) which transmitted said beacon or series of beacons was determined with the aid of means external to said collection gateway (120);

and such that the device (110) is configured to use (509) the information thus obtained to consider or not consider, or weight, the received beacons, to determine the temporal reference in order to synchronize said device (110) in time and frequency with respect to said communication system and/or the one or more spatial references to determine the geolocation of said device (110).

12. Method for allowing a device (110) to determine a temporal reference and/or at least one spatial reference, by means of a collection gateway (120) of a communication system comprising a plurality of such collection gateways (120, 121, 122) designed to communicate with terminal devices (110, 111) by means of wireless communications, each one of the collection gateways transmitting (408), within the communication system, beacons, referred to as synchronization beacons, allowing devices receiving them to synchronize in time and frequency with respect to said communication system, the method being such that said collection gateway (120) performs the following steps:

- obtaining (401) information about the current geolocation of said collection gateway (120);
- obtaining (402) information representative of a communication technology used to determine the current geolocation of said collection gateway (120);
- obtaining (403) information indicating whether the current geolocation of said collection gateway (120) was determined with the aid of means internal to said collection gateway (120), or else whether the current geolocation of said collection gateway (120) was determined with the aid of means external to said collection gateway (120);

and such that said collection gateway (120) transmits (408) the information thus obtained in a beacon or a series of beacons to said device, in order to allow said device to use said information to determine the temporal reference in order to synchronize in time and frequency with respect to said communication system and/or the one or more spatial references to determine the geolocation of said device, and in that said device implements the method according to Claim 1.

13. System comprising a device according to Claim 11 and a collection gateway (120) which is configured to allow said device (110) to determine a temporal reference and/or at least one spatial reference, the collection gateway (120) being intended to be included in a communication system comprising a plurality of such collection gateways (120, 121, 122) designed to communicate with terminal devices (110, 111) by means of wireless communications, each one of the collection gateways being configured to transmit (408), within the communication system, beacons, referred to as synchronization beacons, allowing devices receiving them to synchronize in time and frequency with respect to said communication system,

the system being such that said collection gateway (120) implements:

- means for obtaining (401) information about the current geolocation of said collection gateway (120);
- means for obtaining (402) information representative of a communication technology used to determine the current geolocation of said collection gateway (120);
- means for obtaining (403) information indicating whether the current geolocation of said collection gateway (120) was determined with the aid of means internal to said collection gateway (120), or else whether the current geolocation of said collection gateway (120) was determined with the aid of means external to said collection gateway (120);

and such that said collection gateway (120) implements means for transmitting (408) the information thus obtained in a beacon or a series of beacons to said device, in order to allow said device to use said information to determine the temporal reference in order to synchronize in time and frequency with respect to said communication system and/or the one or more spatial references to determine the geolocation of said device.

14. Computer program product comprising a set of instructions causing the execution, by a processor (201) of a device (110, 120) intended to be included in a communication system, of the method according to any one of Claims 1 to 10, when said computer program is executed by said processor.

15. Information storage means storing a computer program comprising a set of instructions causing the execution, by a processor (201) of a device (110, 120) intended to be included in a communication system, of the method according to any one of Claims 1 to 10, when said computer program is executed by said processor.

Fig. 1

| | | |
|---|---|---|
| **201** CPU | **202** RAM | **203** ROM |

| | | |
|---|---|---|
| **204** | **205** | **206** |

210

## Fig. 2

| | | |
|---|---|---|
| **311** | | **331** |
| **312** | **321** | **332** |
| **313** | **322** **323** | **333** |
| **110** | **120** | **130** |

## Fig. 3

Obtention d'une information de
géolocalisation courante de la passerelle ⟶ 401

Obtention d'une information représentative d'une
technologie de communication utilisée pour
effectuer la géolocalisation de la passerelle ⟶ 402

Obtention d'une information indiquant si la
géolocalisation de la passerelle a été
obtenue par des moyens internes ou
externes ⟶ 403

Obtention d'une information représentative
d'un algorithme de résolution utilisé pour
effectuer la géolocalisation de la passerelle ⟶ 404

Obtention d'une information représentative
d'un instant auquel la géolocalisation courante
de la passerelle a été déterminée ⟶ 405

Obtention d'une information représentative
d'une différence entre la géolocalisation
courante de la passerelle et une géolocalisation
précédente de la passerelle ⟶ 406

Obtention d'une information représentative
d'une incertitude moyenne de géolocalisation ⟶ 407

Transmission de balise(s) incluant les
informations obtenues ⟶ 408

Fig. 4

Réception de balises en provenance de
plusieurs passerelles et décodage des balises
501

Obtention d'une information de géolocalisation
courante de chaque passerelle
502

Obtention d'une information représentative d'une
technologie de communication utilisée pour
effectuer la géolocalisation de chaque passerelle
503

Obtention d'une information représentative
d'un caractère interne ou externe de la
géolocalisation de chaque passerelle
504

Obtention d'une information représentative d'un
algorithme de résolution utilisé pour effectuer la
géolocalisation de chaque passerelle
505

Obtention d'une information représentative
d'un instant auquel la géolocalisation courante
de chaque passerelle a été déterminée
506

Obtention d'une information représentative d'une différence
entre la géolocalisation courante de chaque passerelle et une
géolocalisation précédente de ladite passerelle
507

Obtention d'une information représentative
d'une incertitude moyenne de géolocalisation
508

Détermination d'une référence
temporelle et/ou au moins une référence spatiale
509

Fig. 5

| Détermination d'une information de convergence de géolocalisation | 601 |
|:---:|:---:|

↓

| Filtrage | 602 |
|:---:|:---:|

↓

| Classement | 603 |
|:---:|:---:|

↓

| Sélection d'une ou plusieurs passerelles comme références spatiales | 604 |
|:---:|:---:|

↓

| Géolocalisation | 605 |
|:---:|:---:|

Fig. 6

| Détermination d'une information de convergence de géolocalisation | 701 |
|:---:|:---:|

↓

| Pondération | 702 |
|:---:|:---:|

↓

| Détermination d'une référence temporelle (synchronisation) | 703 |
|:---:|:---:|

Fig. 7